# EUROPÄISCHE PATENTSCHRIFT

(11) **EP 2 686 172 B1**
(45) Veröffentlichungstag und Bekanntmachung des Hinweises auf die Patenterteilung: **24.06.2015**
(21) Anmeldenummer: 12709049.6
(22) Anmeldetag: 07.03.2012
(51) Int. Cl.: B42D 15/00, G02B 5/18, B29D 11/00, B32B 3/30

(54) **MEHRSCHICHTKÖRPER**
MULTILAYER BODY
CORPS MULTICOUCHE

(30) Priorität: 15.03.2011 DE 102011014114
(43) Veröffentlichungstag der Anmeldung: 22.01.2014
(73) Patentinhaber: OVD Kinegram AG, 6301 Zug (CH)
(72) Erfinder: TOMPKIN, Wayne Robert, CH-5400 Baden (CH); WALTER, Harald, CH-8810 Horgen (CH)
(74) Vertreter: Louis Pöhlau Lohrentz
(86) Internationale Anmeldenummer: PCT/EP2012/053873
(87) Internationale Veröffentlichungsnummer: WO 2012/123303

(56) Entgegenhaltungen:
- EP-A1- 1 855 127
- WO-A1-2010/034420
- DE-A1-102005 061 749
- US-A1- 2010 254 007

## Beschreibung

Die Erfindung betrifft einen Mehrschichtkörper, insbesondere in Form einer Transferfolie, einer Laminierfolie, einer Verpackungsfolie, eines Dekorelements oder Sicherheitselements, sowie ein Verfahren zur Herstellung eines solchen Mehrschichtkörpers.

Sicherheitsdokumente mit einem beugungsoptischen Sicherheitselement sind beispielsweise aus der EP 0 105 099 B1 und der EP 0 375 833 B1 bekannt. Bei diesen Sicherheitselementen sind Beugungsgitter in eine Schicht eines Mehrschichtkörpers abgeformt und mit einer metallischen Reflexionsschicht belegt. Durch die Beugung des einfallenden Lichts an diesen Beugungsgittern wird ein optisch variabler Effekt generiert, welcher durch die Spatialfrequenz der Beugungsgitter sowie deren Azimuthwinkel bestimmt wird. So ist bei dem in EP 0 105 099 B1 beschriebenen Sicherheitselement die Beugungsstruktur derart ausgebildet, dass sich das bei einer gegebenen Beleuchtungs- und Beobachtungsrichtung einstellende Farbmuster mit lokal vorbestimmter Geschwindigkeit in einer vorbestimmten Bahn bewegt, wenn das Substrat in seiner Ebene in einem bestimmten Drehsinn und mit einer bestimmten Geschwindigkeit gedreht wird. In EP 0 375 833 B1 sind die verschiedenen Felder eines Rasterfelds mit einer größten Abmessung von weniger als 0,3mm mit unterschiedlichen Beugungsgittern belegt, so dass sich bei Betrachtung des Sicherheitselements unterschiedliche Darstellungen in unterschiedlichen Betrachtungsrichtungen des Sicherheitselements ergeben.

Eine weitere Möglichkeit der Erzeugung eines optisch variablen Effekts wird in der WO 03/095657 A2 beschrieben. Eine achromatische Oberflächenstruktur wird hier übereinanderliegend mit einer Dünnfilmstruktur kombiniert. Die achromatischen Strukturen weisen hierbei eine Größenordnung auf, in der Beugungserscheinungen die optischen Eigenschaften nur noch gering beeinflussen und damit die Strukturen im Wesentlichen wie gekippte Spiegel wirken. Das beschriebene Sicherheitselement weist hier Teilflächen auf, die mit unterschiedlichen achromatischen Oberflächenstrukturen belegt sind, beispielsweise Sägezahnstrukturen, welche in einer ersten Teilfläche einen zu einer zweiten Teilfläche unterschiedlichen Azimuthwinkel aufweisen. Diese unterschiedlichen Teilflächen sind weiter zusätzlich mit einer Dünnfilmschichtstruktur belegt, so dass in den Teilflächen unterschiedliche Farb- und Kontrastwechsel generiert werden und für den Betrachter beim Drehen oder Kippen den Eindruck eines definierten, fast diskreten Farbwechsels entsteht.

Das Dokument DE 10 2005 061749 offenbart eine achromatisch reflektierende Mikrostruktur in Form eines Mosaiks aus einer Vielzahl achromatisch reflektierender Mosaikelemente, die durch die Parameter Grösse, Umrissform, Reliefform, Reflexionsvermögen und räumliche Ausrichtung charakterisiert sind.

Der Erfindung lieg nun die Aufgabe zugrunde, einen Folienkörper sowie ein Verfahren zu dessen Herstellung anzugeben, welcher sich durch einen optisch variablen Effekt auszeichnet, welcher sich von dem der vorgehend beschriebenen bekannten optisch variablen Effekte unterscheidet und so entsprechende Vorteile bei Dekorations- und Sicherheitsanwendungen besitzt.

Diese Aufgabe wird von einem Mehrschichtkörper gemäß Anspruch 1 oder 2 gelöst.

Pseudo-zufällig bedeutet hierbei, dass der jeweils variiert Parameter F, S, H, P, Ax, Ay und Az nicht alle möglichen Werte einnehmen kann, sondern nur Werte aus einem engeren, vordefinierten Variationsbereich. Die pseudo-zufällige Variation kann hierbei alle Werte aus diesem engeren, vordefinierten Variationsbereich mit gleicher Wahrscheinlichkeit berücksichtigen. Es ist aber auch möglich, eine (mathematische) Funktion für die Wahrscheinlichkeit der Berücksichtigung eines Wertes aus diesem Variationsbereich einzusetzen. Beispiele solcher Funktionen sind die Gaußfunktion sowie eine invertierte Gaußfunktion.

Der Erfindung liegt hierbei die Erkenntnis zugrunde, dass durch die Abformung der wie oben spezifizierten Facettenflächen in einer Schicht eines Mehrschichtkörpers sich ein optisch variabler Effekt generieren lässt, welcher sich für den menschlichen Betrachter von dem durch die vorgenannten Verfahren nach dem Stand der Technik erzielbaren optisch variablen Effekt unterscheidet. Der erfindungsgemäße optisch variable Effekt kann sich beispielsweise je nach Wahl der reflektierenden Schicht durch eine charakteristische Tiefenwirkung und/oder durch charakteristische Farb- und/oder Glitzereffekte auszeichnen. Insbesondere zeichnet sich der optisch variable Effekt dadurch aus, dass er keine oder nahezu keine, störenden diffraktiven Komponenten aufweist, beispielsweise Regenbogeneffekte. Der optisch variable Effekt ist also weitgehend achromatisch. Dadurch lässt sich eine möglichst große Unterscheidung zu den bekannten diffraktiven Effekten erzielen. Ferner erleichtert dies Laien, den Effekt zu eindeutig zu identifizieren. Besonders vorteilhaft ist hierbei weiter auch, dass sich durch die Erfindung diese optisch variablen Effekte besonders kostengünstig durch großindustrielle Prozesse herstellen lassen und reproduzierbar herstellbar sind. Im Weiteren können die durch die Facettenflächen eines erfindungsgemäßen Mehrschichtkörpers erzeugten optisch variablen Effekte auch im Register mit anderen Elementen, welche einen andersartigen optisch variablen Effekt zeigen, in einen Folienkörper integriert werden.

Vorteilhafte Ausführungen der Erfindung sind in den Unteransprüchen bezeichnet.

Die reflektierende zweite Schicht kann vollflächig auf den Facettenflächen und den Flächen zwischen den Facettenflächen aufgebracht sein, sie kann aber auch nur auf den Facettenflächen oder nur auf Teilen der Facettenflächen vorhanden sein und in den übrigen Flächenbereichen nicht vorhanden sein. Dies lässt sich beispielsweise über sogenannte Demetallisierungsprozesse erreichen, insbesondere bekannte Ätzverfahren oder Waschverfahren. Ferner kann auf eine partiell vorhandene reflektierende zweite Schicht, z.B. Aluminium, eine weitere reflektierende zweite Schicht, z.B. ZnS, aufgebracht sein, die insbesondere transparent oder transluzent sein kann.

Gemäß eines bevorzugten Ausführungsbeispiels der Erfindung ist die reflektierende zweite Schicht im ersten Bereich jeweils im Bereich der Facettenflächen vorgesehen und in dem nicht mit den Facettenflächen belegten Bereich nicht vorgesehen. Hierzu wird die zweite reflektierende Schicht beispielsweise vollflächig zumindest im ersten Bereich auf die erste Schicht aufgebracht und sodann in den Teilbereichen des ersten Bereichs wieder entfernt, die nicht mit den Facettenflächen belegt sind.

Gemäß eines bevorzugten Ausführungsbeispiels der Erfindung ist die reflektierende zweite Schicht im ersten Bereich jeweils im Bereich der Facettenflächen vorgesehen und in einem ersten Teilbereich des ersten Bereichs, der nicht mit den Facettenflächen belegt ist, nicht vorgesehen. Weiter ist vorzugsweise in dem ersten Bereich ein zweiter Teilbereich vorgesehen, der nicht mit den Facettenflächen belegt ist, und in dem die reflektierende zweite Schicht vorgesehen ist. Hierbei ist es auch möglich, dass eine Vielzahl von ersten und/oder zweiten derartigen Teilbereichen vorgesehen ist. Der mindestens eine Teilbereich und/oder der mindestens eine zweite Teilbereich sind vorzugsweise musterförmig ausgebildet. Vorzugsweise bildet der mindestens eine Teilbereich einen Hintergrundbereich und der mindestens eine zweite Teilbereich einen Musterbereich oder umgekehrt. Vorzugsweise sind der mindestens eine erste Teilbereich und der mindestens eine zweite Teilbereich hierbei so ausgebildet, dass diese bei Durchlichtbetrachtung für den menschlichen Betrachter eine optisch wahrnehmbare Information generieren, welche durch die Ausformung des mindestens einen ersten Teilbereichs und des mindestens einen zweiten Teilbereichs bestimmt wird. Vorzugsweise weist hierbei der mindestens eine erste Teilbereich und der mindestens eine zweite Teilbereich eine laterale Abmessung von mehr als 300 µm auf.

Vorzugsweise ist der Mehrschichtkörper in den ersten Teilbereichen oder in dem ersten Teilbereich transparent ausgebildet.

Bezüglich der Anordnung der Facettenflächen in ersten Teilbereichen und zweiten Teilbereichen wird hierbei von einer Betrachtungsrichtung senkrecht zur Grundebene ausgegangen.

Durch diese Maßnahmen kann das optische Erscheinungsbild des Mehrschichtkörpers weiter verbessert werden.

Gemäß einem bevorzugten Ausführungsbeispiel der Erfindung ist in die zweite Oberfläche der ersten Schicht in einem Teilbereich des ersten Bereichs, der nicht mit den Facettenflächen belegt ist, eine Hintergrundstruktur abgeformt. Die Hintergrundstruktur wird hierbei vorzugsweise von einer diffraktiven und/oder refraktiven Reliefstruktur gebildet, welche einen sich vom optischen Effekt der Facettenfläche unterscheidenden zweiten optischen Effekt generiert.

Vorzugsweise ist der mit der Hintergrundstruktur belegte Teilbereich des ersten Bereichs in Form eines Hintergrundbereichs ausgeformt, der eine oder mehrere, vorzugsweise sämtliche der Facettenflächen umschließt.

Die Hintergrundstruktur umfasst vorzugsweise eine Reliefstruktur, insbesondere eine diffraktive Reliefstruktur, welche Bewegungs- und/oder Morphing-Effekte als optischen Effekt generiert. Vorzugsweise ist hierbei der mit der Hintergrundstruktur belegte Teilbereich in eine Vielzahl von Zonen geteilt, welche jeweils mit einem diffraktiven Beugungsgitter belegt sind, wobei sich zumindest einer der Gitterparameter benachbarter Zonen unterscheidet, sich insbesondere die Spatialfrequenz und/oder der Azimuthwinkel der diffraktiven Strukturen benachbarter Zonen unterscheidet.

Weiter ist es auch bevorzugt, wenn die Hintergrundstruktur diffraktiv und/oder refraktiv wirkende mikroskopische Reliefstrukturen umfasst, welche eine makroskopische Dreidimensionalität ähnlich einer refraktiven Verzerrungslinse oder optisch verzerrenden Freiformeffekt oder einen sonstigen, dreidimensional wirkenden Effekt generiert.

Der Flächenanteil der mit den Facettenflächen belegten Teilflächen des ersten Bereichs an den mit den Hintergrundstrukturen und den Facettenflächen belegten Teilflächen des ersten Bereichs beträgt vorzugsweise weniger als 70%, weiter bevorzugt weniger als 50%, weiter bevorzugt weniger als 30% bei Betrachtung senkrecht zur Grundebene.

Vorzugsweise sind die Flächenschwerpunkte benachbarter Facettenflächen weniger als 300µm, weiter bevorzugt weniger als 100µm, voneinander entfernt. Bevorzugt sind die Flächenschwerpunkte benachbarter Facettenflächen zwischen 2µm und 300µm, weiter zwischen 5µm und 100µm, weiter bevorzugt zwischen 5µm und 50µm voneinander entfernt.

Der minimale Abstand zwischen einem Punkt auf einer Außenkante einer Facettenfläche und einem Punkt auf der Außenkante einer benachbarten Facettenfläche beträgt bevorzugt weniger als 300µm, weiter bevorzugt weniger als 100µm, weiter bevorzugt weniger als 50µm und vorzugsweise zwischen 0 und 300µm, weiter bevorzugt zwischen 0µm und 100µm, weiter bevorzugt zwischen 1µm und 50µm. Diese Bemessungsregel gilt vorzugsweise für sämtliche Facettenflächen im ersten Bereich.

Durch eine derartige Anordnung der Facettenflächen zueinander ergeben sich insbesondere bei Anordnung einer Hintergrundstruktur Vorteile bezüglich der Sichtbarkeit und Überlagerung der durch die Facettenflächen und die Hintergrundstruktur bereitgestellten optischen Informationen.

Besonders vorteilhaft ist in diesem Zusammenhang weiter, in den Teilbereichen des ersten Bereichs, welche nicht mit den Facettenflächen belegt sind, in die erste Schicht eine Reliefstruktur abzuformen, welche eine Beugungsstruktur nullter Ordnung ausbildet. Bevorzugt weist diese Struktur hierbei eine Beabstandung benachbarter Struktur Elemente auf, die klein als die Wellenlängen des sichtbaren Lichts ist. Weiter werden als Strukturelemente für diese Struktur bevorzugt Strukturen verwendet, deren Tiefen zu Breitenverhältnis größer als 0,5, weiter bevorzugt größer als 1 ist.

Mithilfe dieser Strukturen kann zum Einen die Demetallisierung der Teilbereiche des ersten Bereichs gesteuert werden, die nicht mit Facettenflächen belegt sind.

Im Weiteren ist es besonders vorteilhaft nach der partiellen Entfernung der reflektierenden Schicht eine weitere reflektierende Schicht vollflächig aufzubringen, sodass die zweite Schicht in unterschiedlichen Teilbereichen des ersten Bereichs unterschiedlich reflektierende Eigenschaften besitzt und über einen unterschiedlichen Schichtaufbau verfügt. Wird somit auf die erste Schicht zunächst eine Metallschicht als reflektierende Schicht aufgebracht und, nach partieller Entfernung dieser Metallschicht in den nicht mit den Facettenflächen belegten Teilbereichen des ersten Bereichs eine dielektrische Reflektionsschicht vollflächig aufgebracht, beispielsweise eine transparente oder transluzente HRI-Schicht, beispielsweise ZnS, aufgebracht, so ergeben sich zwei unterschiedliche optische Effekte, in den mit den Facettenflächen belegten Teilbereichen des ersten Bereichs und in den nicht mit den Facettenflächen belegten Teilbereich der ersten Schicht: In den nicht mit den Facettenflächen belegten Teilbereichen wird aufgrund der Kombination der dielektrischen Reflektionsschicht und der Beugungsstrukturen nullter Ordnung ein Farbkippeffekt generiert, welcher beim Drehen des Mehrschichtkörpers auftritt. Dieser optische Effekt wird sodann von dem bereits oben geschilderten, durch die Facettenflächen bewirkten optischen Effekt überlagert.

Besonders vorteilhaft ist es hierbei weiter, wenn diese beiden Effekte so eingestellt werden, dass sich dies unter einem ersten Betrachtungswinkel die gleiche Farbe zeigen und unter einem zweiten Betrachtungswinkel eine unterschiedliche Farbe zeigt. Hierdurch kann ein leicht zu kontrollierendes Sicherheitsmerkmal bereitgestellt werden.

Gemäß eines bevorzugten Ausführungsbeispiels der Erfindung weist die zweite Schicht ein Dünnfilmschichtsystem auf, welches einen blickwinkelabhängigen Farbverschiebungseffekt insbesondere im sichtbaren Wellenlängenbereich generiert. Ein solches Dünnfilmschichtsystem zeichnet sich insbesondere durch eine oder mehrere Distanzschichten aus. Die optisch wirksame Schichtdicke dieser Distanzschichten erfüllt, bevorzugt für einen bestimmten Blickwinkel, die λ/2- oder λ/4-Bedingung für eine Wellenlänge In insbesondere im Bereich des sichtbaren Lichts. Das Dünnfilmschichtsystem kann hierbei aus einer einzigen Schicht, aus einem Schichtsystem mit ein oder mehreren dielektrischen Schichten und ein oder mehreren metallischen Schichten oder aus einem Schichtstapel mit zwei oder mehr dielektrischen Schichten bestehen.

Weiter ist es auch möglich, dass der Farbverschiebungseffekt durch die Kombination einer insbesondere transparenten oder transluzenten HRI-Schicht (HRI = High Refraction Index) mit zusätzlich in die Facettenflächen eingebrachten Mikrostrukturen, z.B. Subwellenlängengittern, generiert wird.

Neben einem Dünnfilmschichtsystem kann hierbei die zweite Schicht auch noch ein oder mehrere weitere Schichten aufweisen. Durch den Einsatz eines Dünnfilmschichtsystems in der zweiten Schicht ergeben sich interessante Farbwechseleffekte, welche sich bei entsprechender Variation der oben angeführten Parameter durch eine hohe Tiefenwirkung sowie farbige Glitzereffekte auszeichnen.

Weiter ist es auch vorteilhaft, dass die zweite Schicht eine orientierte Flüssigkristallschicht, insbesondere eine cholesterische Flüssigkristallschicht, eine Metallschicht, eine HRI-Schicht oder eine LRI-Schicht (HRI = High Refraction Index, LRI = Low Refraction Index), oder eine Schicht umfassend einen Lack, ein magnetisches Pigment, ein mit einer Tinte dotiertes Polymer, Nanopartikel oder lumineszente Materialien umfasst.

Bei der ersten Schicht handelt es sich vorzugsweise um eine transparente Schicht, insbesondere um eine Schicht aus einem transparenten Replizierlack. In den Replizierlack sind Oberflächenstrukturen eingeprägt, die entweder eine optische Funktion erfüllen (Beugung, Brechung, Reflexion) und/oder eine andere, nicht optische Funktion erfüllen. Derartige Strukturen, z.B. ein insbesondere musterförmig angeordnetes diffraktives Liniengitter mit 500 bis 5000 Linien/mm, können beispielsweise dazu dienen, die Moleküle der Flüssigkristallschicht insbesondere musterförmig auszurichten und dadurch ihre Polarisationswirkung bzw. ihre Polarisationscharakteristik insbesondere musterförmig festzulegen.

Gemäß eines bevorzugten Ausführungsbeispiels der Erfindung generiert der Mehrschichtkörper eine für den menschlichen Betrachter erkennbare optisch variable erste Information, wobei zur Generierung der ersten Information die Neigungswinkel Ax und Ay der Facettenfläche im ersten Bereich gemäß einer Funktion F(x,y) variiert sind. Hierbei ist es zum einen möglich, dass zusätzlich ein oder mehrere der Parameter F, S, H, P oder Az im ersten Bereich pseudo-zufällig innerhalb ihres jeweiligen, für den ersten Bereich vordefinierten Variationsbereichs variiert sind.

Ein besonders interessanter optisch variabler Eindruck lässt sich im weiteren jedoch durch folgende bevorzugte Ausführungsform der Erfindung verwirklichen: Bei dieser Ausführungsform werden die Neigungswinkel Ax und Ay der Facettenflächen im ersten Bereich jeweils gemäß einer additiven oder multiplikativen Überlagerung der durch eine Funktion F(x,y) bestimmten Neigungswinkel Ax und Ay mit der pseudo-zufälligen Variation des Neigungswinkels Ax und/oder des Neigungswinkels Ay innerhalb des jeweiligen für den ersten Bereich vordefinierten Variationsbereichs bestimmt. Die Funktion F(x,y) ist hierbei so gewählt, dass sie die Neigungswinkel Ax und Ay zur Generierung einer optisch variablen ersten Information variiert.

Vorzugsweise wird hierbei der vordefinierte Variationsbereich der Neigungswinkel Ax und Ay geringer als die mittlere Steigung der Funktion F(x,y) im ersten Bereich gewählt, insbesondere zwischen dem 0,1-fachen und dem 1,9-fachen der mittleren Steigung der Funktion F(x,y) gewählt. Hierdurch wird sichergestellt, dass die erste optisch variable Information in ihrem Erscheinungsbild nicht zu stark von zusätzlichen optisch variablen Effekten wie einem erhöhten Tiefeneindruck, Glitzer- und Textureffekt überlagert wird und die Erkennbarkeit der ersten Information so nicht beeinträchtigt wird.

Es ist zu beachten, dass unterschiedliche Reihenfolgen für die verschiedenen Variationen - z.B. der Neigungswinkel Ax und Ay sowie des Azimuthwinkel Az der Facettenfläche, die Anwendung der zu überlagernden Funktion F(x,y) und das Einfügen der pseudo-zufällig Variation - zu unterschiedlichen Ergebnissen führen.

Vorzugsweise beschreibt die Funktion F(x,y) eine dreidimensionale Freiformfläche mit ein oder mehreren Freiformelementen. Die Neigungswinkel Ax und Ay werden hierbei vorzugsweise durch die jeweilige Flächennormale der dreidimensionalen Freiformfläche im Flächenschwerpunkt der jeweiligen Facettenfläche bestimmt.

Die Freiformelemente besitzen beispielsweise die Form oder den Umriss eines alphanumerischen Zeichens, einer geometrischen Figur oder eines sonstigen Objekts. Weiter ist die dreidimensionale Formgebung der Freiformelemente vorzugsweise so gewählt, dass diese einen linsenartigen Vergrößerungs-, Verkleinerungs- oder Verzerrungseffekt generieren. Die Freiformelemente besitzen hierzu vorzugsweise in einer auf der Grundebene senkrecht stehenden Schnittebene eine linsenförmige Formgebung, beispielsweise eine Formgebung, welche einem entsprechenden Schnitt durch eine Sammel-, Streu- oder Verzerrungslinse entspricht. Die dreidimensionale Freiformfläche besitzt vorzugsweise eine gemeinsame Basisebene, aus der sich die ein oder mehreren Freiformelemente erheben bzw. absenken.

Gemäß eines bevorzugten Ausführungsbeispiels der Erfindung beschreibt die Funktion F(x,y) somit im Bereich eines Freiformelements eine Freiformfläche in Form einer Linse oder zur Darstellung eines alphanumerischen Zeichens, einer geometrischen Figur oder eines sonstigen Objekts transformierten Linse.

Die Umrisslinien der Freiformelemente in einer Schnittebene parallel zur Grundebene entspricht hierbei vorzugsweise der ersten Information und hat beispielsweise die Formgebung eines Buchstabens, eines Symbols, einer geometrischen Figur oder eines sonstigen Objekts.

Gemäß eines weiteren bevorzugten Ausführungsbeispiels der Erfindung beschreibt die Funktion F(x,y) einen Ausschnitt einer Oberfläche eines dreidimensionalen Objekts als Freiformelement. Die dreidimensionale Formgebung eines Freiformelements entspricht so beispielsweise einem Ausschnitt einer Skulptur, einem Ornament oder Relief oder eines sonstigen dreidimensionalen Objekts, beispielsweise eines Gebäudes, einer menschlichen Person usw.

Bevorzugt sind benachbarte Maxima eines Freiformelements in Richtung der z-Achse bezogen auf eine Projektion auf die Grundebene mehr als 0,5mm, weiter bevorzugt mehr als 1 mm und noch weiter bevorzugt mehr als 3mm voneinander beabstandet. Weiter beträgt die kleinste Abmessung eines Freiformelements bezogen auf eine Projektion auf die Grundebene mehr als 2mm, weiter bevorzugt mehr als 4mm.

Unter kleinster Abmessung eines Freiformelements bezogen auf eine Projektion auf die Grundebene ist hierbei die Breite des Freiformelements bzw. die Beabstandung derjenigen gegenüberliegenden Randpunkte der Projektionsfläche zu verstehen, die auf einer Schnittgeraden durch den Flächenschwerpunkt der Projektionsfläche liegen und im Vergleich zu den übrigen gegenüberliegenden Punkten die kleinste Beabstandung aufweisen.

Vorzugsweise liegen hierbei die durch Umrisslinie der Projektionsfläche des Freiformelements auf der Grundebene bestimmten Abmessungen (Länge, Breite) des Freiformelements im Bereich von 2mm bis 50mm, weiter bevorzugt von 4mm bis 30mm.

Gemäß eines bevorzugten Ausführungsbeispiels der Erfindung ist die Funktion F(x,y) im Bereich des Freiformelements stetig und differenzierbar und/oder Funktion F(x,y) setzt sich im Bereich des Freiformelements aus ebenen und gekrümmten Flächenbereichen zusammen, wobei vorzugsweise der Krümmungsradius der gekrümmten Flächenbereiche nicht geringer als 1 mm, weiter bevorzugt nicht geringer als 3mm ist.

Gemäß eines bevorzugten Ausführungsbeispiels der Erfindung ist für die pseudo-zufällige Variation eines oder mehrerer der Parameter F, H, P, Ax, Ay und Az innerhalb des jeweils vordefinierten Variationsbereich pseudo-zufällig ein Parametervariationswert aus einer vordefinierten Gruppe von Parametervariationswerten ausgewählt. Die vordefinierte Gruppe umfasst bevorzugt zwischen 3 und 30, insbesondere zwischen 3 und 10 Parametervariationswerte. Die pseudo-zufällige Variation erfolgt somit nicht im Sinne eines rein zufälligen, in der Natur anzutreffenden Prozesses, welcher sämtliche möglichen Parameter innerhalb des Variationsbereichs einnehmen kann, sondern weist eine vorgegebene Granularität auf. Überraschenderweise hat sich gezeigt, dass sich hierdurch ein besonders eindrucksvoller optisch variabler Effekt zeigt. Darüber hinaus hat sich gezeigt, dass sich bereits mit 3 Parametervariationswerten diffraktive Effekte - welche bei sehr kleinen Facettenflächen auftreten können - weitgehend zerstören lassen. Auf diese Weise lassen sich auch mit diesen kleinen Facettenflächen achromatische Effekte realisieren. Solche achromatischen Effekte sind eindeutiger als solche Effekte, welche noch mit diffraktiven Effekten überlagert sind. Somit sind sie leichter zu identifizieren und ästhetisch ansprechender.

Vorzugsweise wird der Neigungswinkel Ax und/oder Ay der Facettenfläche in dem ersten Bereich pseudo-zufällig in einem Variationsbereich von -45° bis +45°, weiter bevorzugt von -30° bis +30°, besonders bevorzugt -15° bis +15°, insbesondere zur Erzielung eines Glitzereffekts variiert.

Weiter ist es vorteilhaft, den Azimuthwinkel Az der Facettenflächen in dem ersten Bereich pseudozufällig in einem Variationsbereich von -90° bis +90°, weiter bevorzugt von -45° bis +45° und besonders bevorzugt -15° bis +15° zu variieren.

Gemäß eines weiteren bevorzugten Ausführungsbeispiels der Erfindung wird die Beabstandung H des Flächenschwerpunkts der Facettenflächen von der Grundebene in dem ersten Bereich pseudo-zufällig variiert. Der durch die Differenz der maximalen Beabstandung Hₘₐₓ und der minimalen Beabstandung Hₘᵢₙ, zwischen denen die Beabstandung H der Facettenfläche pseudo-zufällig variiert ist, definierte Variationsbereich beträgt hierbei bevorzugt zwischen 0,5µm und 8µm, weiter bevorzugt zwischen 0,5µm und 2µm.

Gemäß eines bevorzugten Ausführungsbeispiels der Erfindung sind die Facettenflächen gemäß eines zweidimensionalen, von der x-Achse und der y-Achse aufgespannten Rasters angeordnet. Es ist jedoch auch weiter möglich, dass - wie bereits oben ausgeführt - die Position P der Facettenflächen pseudo-zufällig variiert wird, so dass die Facettenflächen nicht mehr gemäß einem regelmäßigen Raster angeordnet sind.

In diesem Fall wird gemäß eines bevorzugten Ausführungsbeispiels der Erfindung wie folgt verfahren: Die Position P jeder der Facettenflächen im ersten Bereich wird durch eine pseudo-zufällige Verschiebung des Flächenschwerpunktes der jeweiligen Facettenfläche aus einer jeweiligen Regelposition in x- und/oder y- Richtung bestimmt. Die Regelposition des Flächenschwerpunkts der jeweiligen Facettenfläche wird hierbei vorzugsweise ebenfalls durch ein zweidimensionales, von der x-Achse und der y-Achse aufgespannten Raster bestimmt, durch welches für die im ersten Bereich angeordneten Facettenflächen die Regelposition des Flächenschwerpunkts der jeweiligen Facettenfläche in der Grundebene definiert ist.

Vorzugsweise betragen die Grenzwerte des Variationsbereichs der pseudozufälligen Verschiebung aus der jeweiligen Regelposition in x- und/oder y-Richtung zwischen 0% und 100%, bevorzugt zwischen 0% und 50% und besonders bevorzugt zwischen 0% und 20% der Abmessung der Facettenfläche in Richtung der x-Achse bzw. der y-Achse. Bei einer Abmessung Dx der Facettenfläche in Richtung der x-Achse betragen die Grenzwerte des Variationsbereichs somit +Dx und -Dx, multipliziert mit dem oben dargelegten Faktor. Für die Abmessung in Richtung der y-Achse gilt Entsprechendes.

Die Rasterweite des Rasters in Richtung der x-Achse und/oder der y-Achse beträgt vorzugsweise zwischen dem 1,2-fachen und dem 2-fachen der Abmessung der Facettenfläche in Richtung der x-Achse bzw. y-Achse. Durch die pseudo-zufällige Verschiebung kann es passieren, dass benachbarte Facettenflächen überlappen würden. Dies lässt sich z.B. durch geeignete Algorithmen bei der Generierung der Anordnung der Facettenflächen in der Masterstruktur erreichen. Beispielsweise kann ein Algorithmus die Facettenflächen nacheinander generieren und immer dann, wenn eine neu hinzukommende Facettenfläche mit einer der bereits virtuell vorhandenen Facettenflächen zumindest teilweise die gleiche Fläche in dem Mehrschichtkörper belegen würde, diese neu hinzukommende Facettenfläche in ihrer lateralen Ausdehnung verkleinern. Alternativ kann der Algorithmus die neu hinzukommende Facettenfläche z.B. auch lateral verschieben.

Hierbei hat es sich besonders bewährt den Variationsbereich der zufälligen Verschiebung zwischen +D/2 und dem -D/2 zu wählen, wobei D die Abmessung der Facettenfläche in Richtung der x-Achse bzw. der y-Achse ist und die Rasterweite des Rasters in Richtung der x-Achse und/oder der y-Achse auf das 3/2-fache der Abmessung D der Facettenfläche in Richtung der x-Achse bzw. y-Achse festzusetzen.

Die Form F der Facettenfläche wird bevorzugt aus der Gruppe Quadrat, Rechteck, regelmäßiges Polygons, Kreisscheibe, Kegelschnitt und zufälliges Polygon ausgewählt. Wird die Form F der Facettenfläche pseudo-zufällig im ersten Bereich gewählt, so erfolgt pseudo-zufällig eine Auswahl aus einer Gruppe von unterschiedlich geformten Facettenflächen, welche vorzugsweise eine der oben beschriebenen Formgebungen besitzen. Ein einfaches Beispiel ist ein Rechteck mit einer Breite a und eine Länge b, wobei a und b jeweils pseudo-zufällig gewählt sind.

Wie bereits oben ausgeführt, weist jede der Facettenflächen eine kleinste Abmessung von mehr als 1µm, bevorzugt von mehr als 3µm, und eine größte Abmessung von weniger als 300µm auf. Es hat sich weiter bewährt, dass die kleinsten Abmessungen der Facettenflächen zwischen 1 µm und 20µm, vorzugsweise zwischen 3µm und 10µm liegt. Die größte Abmessung der Facettenflächen liegen bevorzugt zwischen 5µm und 100µm, weiter bevorzugt zwischen 5µm und 50µm und besonders bevorzugt zwischen 5µm und 30µm.

Unter kleinster Abmessung der Facettenfläche ist hierbei die Breite und unter größter Abmessung der Facettenfläche ist hierbei die Länge der Facettenfläche zu verstehen. Die kleinste Abmessung wird durch die Beabstandung derjenigen Randpunkte der Facettenfläche gegeben, die auf einer Schnittlinie durch den Flächenschwerpunkt der Facettenflächen liegen und im Vergleich zu den übrigen, dermaßen benachbart angeordneten Randpunkten die geringste Entfernung voneinander besitzen.

Bevorzugt liegt die kleinste Abmessung in Richtung der größten Steigung der Facettenfläche vor.

Gemäß eines weiteren bevorzugten Ausführungsbeispiels der Erfindung wird die Höhe H_{f} der Facettenflächen, d.h. die Ausdehnung der Facettenfläche in z-Richtung, in dem ersten Bereich pseudo-zufällig variiert. Der durch die Differenz der maximalen Höhe und der minimalen Höhe zwischen denen die Höhe H_{f} der Facettenfläche pseudo-zufällig variiert, geteilt durch die maximale Höhe (Δh=(hₘₐₓ-hₘᵢₙ)/hₘₐₓ) definierte Variationsbereich beträgt hierbei bevorzugt zwischen 50% und 100%, weiter bevorzugt zwischen 70% und 100% und besonders bevorzugt zwischen 85% und 100%.

In einer bevorzugten Ausführungsform der Erfindung sind die Facettenflächen so gestaltet, dass die Höhe H_{f} kleiner 2 µm, bevorzugt kleiner 1 µm und besonders bevorzugt kleiner 0,5 µm ist. Derartige Strukturen lassen sich nicht nur gut mit UV-Replikation herstellen, sondern auch durch thermische Replikation. Bei der thermischen Replikation werden unter Einsatz von Hitze und Druck die Facettenflächen mittels eines Prägewerkzeugs in einen Replizierlack abgeformt. Bei der UV-Replikation besteht der Replizierlack aus einem UV-vernetzbaren Material und die Facettenflächen werden mittels eines Prägewerkzeugs und gleichzeitiger und/oder nachfolgender UV-Bestrahlung in die Oberfläche der Replizierlackschicht abgeformt. Um für die Neigungswinkel Ax und Ay noch sinnvolle Werte erreichen zu können, z.B. ±20°, müssen die Facettenflächen in Richtung der größten Steigung kleiner als 6 µm, bevorzugt kleiner 3 µm und besonders bevorzugt kleiner 1,5 µm sein. Gleichzeitig weist jede der Facettenflächen eine kleinste Abmessung von mehr als 1 µm auf. Die größte Abmessung derartiger Facettenflächen kann dabei deutlich größer sein, als die kleinste Abmessung. Es hat sich nun unerwartet gezeigt, dass solche Facettenflächen nahezu keine Diffraktion aufweisen, wenn mindestens ein Parameter F, H, P, Ax, Ay und Az der Facettenflächen pseudo-zufällig variiert. Bereits eine vordefinierte Gruppe von Parametervariationswerten, welche z.B. 3 Werte umfasst, kann die Erzeugung diffraktiver Effekte verhindern oder unterdrücken. Dies liegt daran, dass die pseudo-zufällige Variation die Regelmäßigkeit bricht, welche für diffraktive Effekte notwendig ist.

Für alle Ausführungsformen, bei denen die maximal Höhe Hₘₐₓ der Facettenflächen unter einen bestimmten Grenzwert gehalten werden soll, gilt, dass bei der Generierung der Facettenflächenanordnung berücksichtigt werden muss, gegebenenfalls diejenigen Facettenflächen in zwei oder mehrere kleinere Facettenflächen zu zerteilen, welche die maximale Höhe Hₘₐₓ überschreiten. Wenn z.B. aus Produktionsgründen, z.B. aufgrund Beschränkungen bei der thermischen Replikation oder der UV-Replikation, diese maximale Höhe 2 µm beträgt und die Facettenflächen eine Fläche S von 10 µm x 10 µm aufweisen, müssen mindestens alle Facettenflächen, welche einen Neigungswinkel von mehr als sin⁻¹(2/10) ≈ 11.5° besitzen, in zwei oder mehr Facettenflächen zerlegt werden. Dabei werden diese kleineren Facettenflächen so gestaltet, dass sie bei dem gewünschten Neigungswinkel die maximale Höhe Hₘₐₓ nicht überschreiten. Dies lässt sich beispielsweise durch geeignete Algorithmen bei der Generierung der Masterstruktur für die Replikation erreichen.

Die Flächengröße S der Facettenflächen beträgt bevorzugt zwischen 5µm² und 6000µm², weiter bevorzugt zwischen 5µm² und 300µm². Wird die Flächengröße S der Facettenflächen pseudo-zufällig variiert so beträgt der Variationsbereich vorzugsweise 10% bis 50% der mittleren Flächengröße der Facettenflächen.

Gemäß eines bevorzugten Ausführungsbeispiels der Erfindung besitzen die Facettenflächen eine Umrissform in Form eines Symbols, eines Buchstabens oder eines sonstigen Objekts. Diese zusätzliche Information ist für das menschliche Auge ohne Verwendung eines Hilfsmittels verborgen. Es wird so eine verborgene zweite optische Information bereitgestellt, welche mittels eines Hilfsmittels, beispielsweise eines Vergrößerungsglases, sichtbar gemacht werden kann.

Weiter ist auch möglich, dass die ein oder mehreren Facettenflächen zusätzlich mit einer diffraktiven Struktur, einer Beugungsstruktur nullter Ordnung, einer isotropen oder anisotropen Mattstruktur oder einem Nanotext, Nanomotiven oder einer funktionalen, nicht optisch wirksamen Struktur belegt sind. Die Facettenflächen können hierbei vollflächig oder nur bereichsweise mit einer solchen zusätzlichen Struktur belegt sein. Hierdurch können weitere interessante optisch variable Effekte oder funktionale Effekte generiert werden. Ein Beispiel dafür sind die in US 4,484,797 und WO 03/059643 A1 beschriebenen optischen Effekte basierend auf sogenannten "resonant gratings", welche durch die Facettenflächen modifiziert werden. Ein anderes Beispiel ist der Ausrichtung von Molekülen in einem Flüssigkristallmaterial, welches auf die Facettenflächen aufgebracht ist zur Einstellung der Polarisationseigenschaften des Flüssigkristallmaterials.

Gemäß eines bevorzugten Ausführungsbeispiels der Erfindung weist der Mehrschichtkörper einen zweiten Bereich auf, wobei ein oder mehrere der Parameter F, S, H, P, Ax, Ay und Az jeder der im zweiten Bereich angeordneten Facettenflächen pseudo-zufällig im zweiten Bereich innerhalb eines jeweils für den zweiten Bereich vordefinierten Variationsbereichs variiert ist. Die Parameter, die pseudo-zufällig im ersten und im zweiten Bereich variiert sind, sind hierbei bevorzugt unterschiedlich gewählt und/oder mindestens ein Variationsbereich der variierten Parameter ist im ersten und im zweiten Bereich unterschiedlich gewählt. Vorzugsweise unterscheidet sich hierbei der mindestens eine Variationsbereich im ersten Bereich von dem im zweiten Bereich um mindestens 20%, weiter bevorzugt 50%. Hierdurch wird erreicht, dass der erste und der zweite Bereich einen unterschiedlichen optisch variablen Eindruck vermitteln.

Gemäß eines bevorzugten Ausführungsbeispiels der Erfindung weist der Mehrschichtkörper einen dritten Bereich auf, in dem in die zweite Oberfläche der ersten Schicht eine Reliefstruktur ausgewählt aus der Gruppe diffraktiver Reliefstruktur, Beugungsstruktur nullter Ordnung, isotroper oder anisotroper Mattstruktur oder insbesondere refraktiv wirkender Makrostruktur abgeformt ist. Durch die im dritten Bereich angeordneten Reliefstrukturen wird so vom Mehrschichtkörper ein weiterer optisch variabler Effekt generiert, welcher sich von dem in den ersten Bereich und/oder zweiten Bereich generierten optisch variablen Effekt unterscheidet. In dem dritten Bereich kann sich jedoch auch eine Volumenhologrammschicht oder ein Sicherheitsdruck befinden.

Vorzugsweise grenzen hierbei der erste, der zweite und/oder der dritte Bereich zumindest bereichsweise aneinander, so dass bei Betrachtung des Mehrschichtkörpers für den menschlichen Betrachter aneinander angrenzende Flächenbereiche sichtbar sind, welche unterschiedliche optisch variable Effekte zeigen. Durch die Erfindung wird hierbei der Vorteil erzielt, dass durch die Generierung des im ersten und/oder zweiten Flächenbereich sichtbaren optisch variablen Effekts, mittels der wie oben spezifizierten Facettenflächen, eine registergenaue Anordnung dieses optischen Effekts zu den mittels Reliefstrukturen generierten optischen Effekten in dem dritten Bereich ermöglicht wird.

Der Mehrschichtkörper ist vorzugsweise als Transferfolie, als Laminierfolie, als Verpackungsfolie, als Sicherheitselement oder Sicherheitsdokument ausgebildet und wird vorzugsweise für dekorative Zwecke oder als Element zur Sicherheit von Wertdokumenten, ID-Dokumenten oder zur Warensicherung eingesetzt.

Der Mehrschichtkörper kann integraler Bestandteil eines Sicherheitsdokuments sein, bei welchem die Facettenflächen direkt in eine Oberfläche des Sicherheitsdokuments abgeformt sind. Die Oberfläche kann dabei zum Beispiel eine aufgedruckte oder anders aufgebrachte Lackschicht oder eine Kunststoffschicht sein, die vor dem Abformen entweder separat aufgebracht wurde oder selbst das Substrat des Sicherheitsdokuments darstellt, beispielsweise eine ID-Dokument aus Polycarbonat oder eine Banknote mit einem Polymersubstrat.

Hierbei ist es auch möglich, dass die Oberfläche des Sicherheitsdokuments, in welche die Facettenflächen abgeformt werden, zusätzliche andere Sicherheitsmerkmale aufweist. Beispielsweise ist es möglich, dass die Oberfläche des Sicherheitsdokuments durch einen Lack mit optisch variablen Pigmenten gebildet ist, in welchen zusätzlich Facettenflächen abgeformt sind. Bilden die optisch variablen Pigmente in der Oberfläche ein Motiv, ist es vorteilhaft, die Facettenflächen dazu registergenau, d.h. lagegenau zu diesem Motiv abzuformen.

Nach der Abformung der Facettenflächen in die Oberfläche des Sicherheitsdokuments ist es vorteilhaft, einen abschließenden Schutzlack aufzubringen, um das Sicherheitsdokument gegen physikalische und/oder chemische Einflüsse zu schützen.

Im Folgenden wird die Erfindung anhand von mehreren Ausführungsbeispielen unter Zuhilfenahme der beiliegenden Zeichnungen beispielhaft erläutert.
Fig.1 zeigt eine schematische Draufsicht auf ein Sicherheitsdokument mit einem Sicherheitselement.
Fig. 2a zeigt eine schematische Draufsicht auf einen Ausschnitt des Sicherheitselements nach Fig.1.
Fig. 2b zeigt eine schematische Schnittdarstellung eines Ausschnitts des Sicherheitselements nach Fig. 2a.
Fig. 2c zeigt eine schematische Draufsicht auf einen Ausschnitt eines Sicherheitselements.
Fig. 2d zeigt eine schematische Schnittdarstellung eines Ausschnitts des Sicherheitselements nach Fig. 2c.
Fig. 2e zeigt eine schematische Draufsicht auf einen Ausschnitt eines Sicherheitselements.
Fig. 2f zeigt eine schematische Schnittdarstellung eines Ausschnitts des Sicherheitselements nach Fig. 2e.
Fig. 2g zeigt eine schematische Darstellung der Draufsicht auf ein Sicherheitselement in unterschiedlichen Vergrößerungsstufen.
Fig. 3a, Fig. 3b, Fig. 3c, Fig. 3d und Fig. 3e zeigen jeweils schematische Schnittdarstellungen von Ausschnitten einer Transferfolie.
Fig. 4 zeigt eine schematische Darstellung einer Schicht mit mehreren abgeformte Facettenflächen.
Fig. 5a - Fig. 5d zeigen schematische Darstellungen zur Verdeutlichung der Variation von Parametern einer Facettenfläche.
Fig. 6a - Fig. 6d zeigen schematische Darstellungen zur Verdeutlichung der Variation von Parametern einer Facettenfläche.
Fig. 7a - Fig. 7e zeigen schematische Darstellungen einer Schicht mit mehreren abgeformten Facettenflächen, bei denen ein oder mehrere Parameter pseudo-zufällig variiert sind.
Fig. 8a - Fig. 8d zeigen jeweils mehrere schematische Darstellungen zur Verdeutlichung von einer Freiformfläche beschriebenen Funktionen.
Fig. 8e zeigt eine schematische Draufsicht auf eine Freiformfläche in Form eines Ausschnitts eines dreidimensionalen Objekts.
Fig. 9a - 9d zeigen schematische Darstellungen einer Schicht mit mehreren abgeformten Facettenflächen, deren Neigungswinkel durch eine eine optische Information beschreibende Funktion mitbestimmt sind.
Fig. 10a - Fig. 10c zeigen Aufnahmen zur Verdeutlichung des optisch variablen Eindrucks eines Mehrschichtkörpers.
Fig. 11a und Fig. 11b zeigen jeweils eine schematische Darstellung eines Ausschnitts eines Mehrschichtkörpers mit mehreren Facettenflächen, welche mit einem Beugungsgitter belegt sind.
Fig. 12a und Fig. 12b zeigen jeweils eine schematische Darstellung eines Ausschnitts eines Mehrschichtkörpers mit mehreren Facettenflächen, welche mit einem Nanotext belegt sind.
Fig. 13a und Fig. 13b zeigen jeweils eine schematische Draufsicht auf einen Ausschnitt eines Mehrschichtkörpers mit mehreren Facettenflächen, welche jeweils mit einem Beugungsgitter belegt sind.

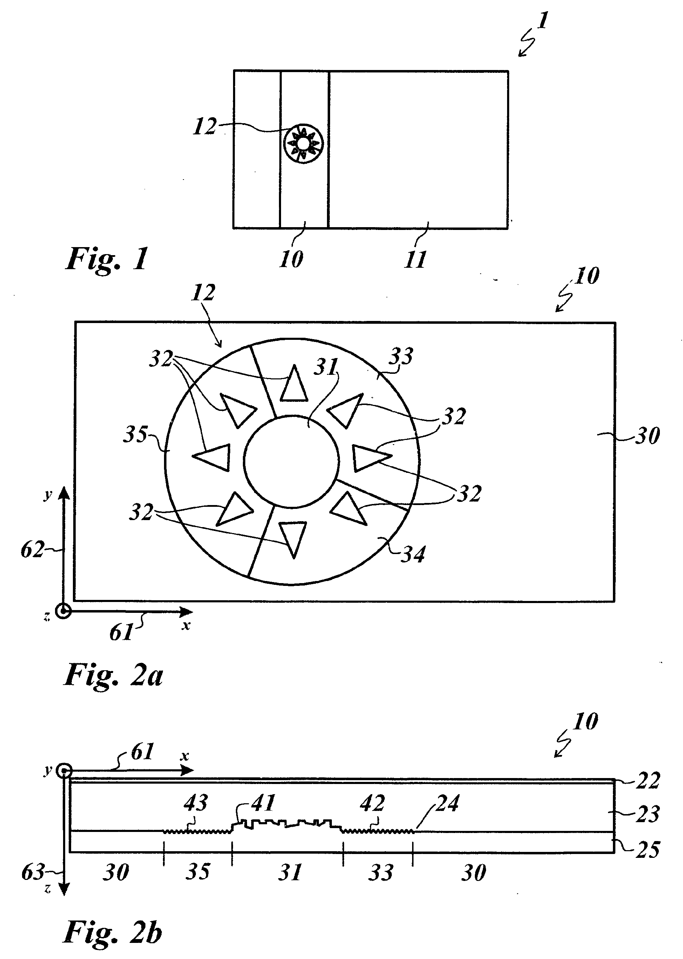

Fig.1 zeigt ein Sicherheitsdokument 1. Bei dem Sicherheitsdokument 1 handelt es sich vorzugsweise um ein Wertdokument, wie eine Banknote. Es ist jedoch auch möglich, dass es sich bei dem Sicherheitsdokument 1 um ein ID-Dokument, eine Kreditkarte oder ähnliches handelt.

Das Wertdokument 1 weist ein Trägersubstrat 11 sowie ein auf das Trägersubstrat 11 appliziertes oder in das Trägersubstrat 11 integriertes Sicherheitselement 10 in Form eines mehrschichtigen Folienkörpers auf. Das Sicherheitselement 10 weist vorzugsweise eine streifenförmige Formgebung mit einer Breite zwischen 1 mm und 20mm, weiter bevorzugt zwischen 2mm und 10mm auf. Weiter erstreckt sich das Sicherheitselement 10 vorzugsweise über die gesamte Breite des Trägersubstrats 11, wie dies beispielhaft in Fig.1 gezeigt ist.

Das Sicherheitselement 10 weist ein oder mehrere optische Sicherheitsmerkmale auf, von denen in Fig.1 ein Sicherheitsmerkmal 12 gezeigt ist. Neben dem Sicherheitsmerkmal 12 können somit auch noch ein oder mehrere weitere, insbesondere optisch erkennbare Sicherheitsmerkmale auf dem Sicherheitselement 10 vorgesehen sein. Hierbei ist es auch möglich, dass das Substrat 11 des Wertdokuments 1 im Bereich des Sicherheitselements 10 einen oder mehrere transparente Bereiche oder entsprechende fensterförmige Ausnehmungen aufweist, in deren Bereich das Sicherheitselement 10 ein in Transmission sichtbares Sicherheitsmerkmal zeigt. So ist es auch möglich, dass im Bereich des Sicherheitsmerkmals 12 ein derartiger transparenter Bereich des Trägersubstrats 11 oder eine derartige fensterförmige Ausnehmung im Trägersubstrat 11 vorgesehen ist.

Das Trägersubstrat 11 besteht vorzugsweise aus einem Papiersubstrat. Es ist jedoch auch möglich, dass das Trägersubstrat 11 aus einem Kunststoffsubstrat oder einem mehrschichtigen Substrat besteht, welches aus mehreren Schichten ausgewählt aus der Gruppe Kunststoffschichten, Metallschichten, Faserschichten und Papierschichten besteht.

Es ist weiter möglich, dass das Sicherheitsdokument 1 neben dem Sicherheitselement 10 noch weitere Sicherheitselemente aufweist und dass das Sicherheitselement 10 zumindest bereichsweise mit ein oder mehreren Schichten überdruckt ist, beispielsweise bereichsweise mit einem Sicherheitsdruck überdruckt ist.

Weiter ist es auch möglich, dass das Sicherheitselement 10 eine andere Formgebung besitzt, beispielsweise in Form eines Patches ausgeformt ist, und dass auch das Sicherheitsdokument 1 eine andere als die in Fig.1 gezeigte Formgebung besitzt, beispielsweise in Form einer Karte, eines Passbuches usw. ausgeformt ist.

Fig. 2a und Fig. 2b verdeutlichen den prinzipiellen Aufbau des Sicherheitselements 10 anhand eines Ausschnitts des Sicherheitselements 10 im Bereich des Sicherheitsmerkmals 12.

Das Sicherheitselement 10 weist eine Schutzschicht 22, eine transparente Schicht 23 und eine Kleberschicht 25 auf. Die Schicht 24 besteht vorzugsweise aus einem transparenten, semi-transparenten oder opaken Reflexionsschicht oder ein transparentes, semi-transparentes oder opakes Dünnfilmschichtsystem.

Die Schutzschicht 22 besteht vorzugsweise aus einer Schutzlackschicht einer Schichtdicke zwischen 0,5µm und 20µm.

Die transparente Schicht 23 besteht vorzugsweise aus einer Replizierlackschicht einer Schichtdicke zwischen 1µm und 50µm, weiter bevorzugt zwischen 2µm und 20µm.

Bei der Kleberschicht 25 handelt es sich vorzugsweise um eine Schicht aus einem thermisch aktivierbaren Kleber mit einer Schichtdicke zwischen 1µm und 5µm. Es ist weiter auch vorteilhaft, als Kleber für die Klebeschicht 25 einen UVaktivierbaren Kleber zu verwenden.

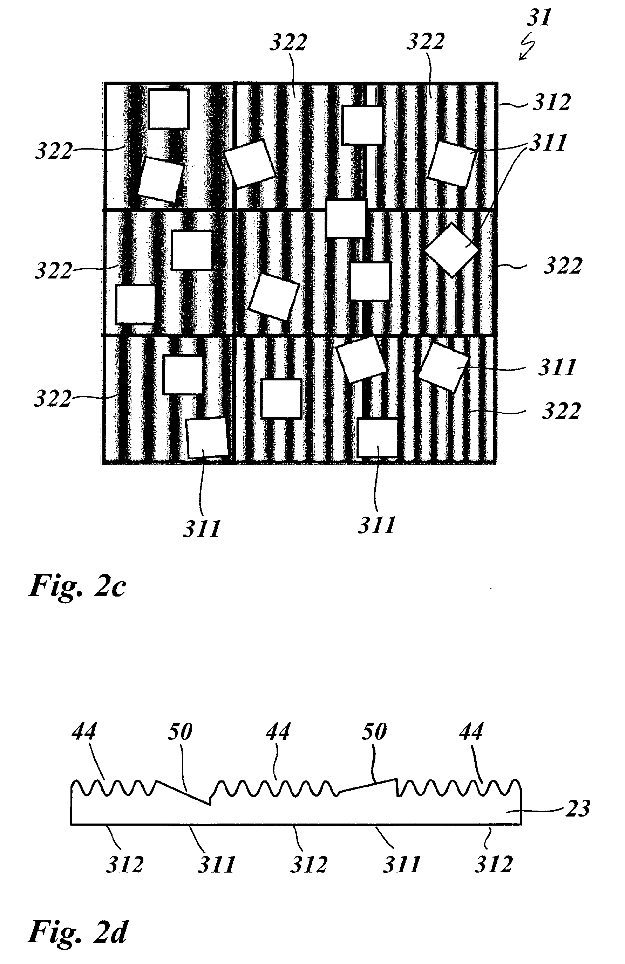

Wie in Fig. 2a und Fig. 2b angedeutet, wird durch die obere Oberfläche der Schicht 23 eine durch Koordinatenachsen x und y aufgespannte Grundebene definiert sowie weiter eine auf dieser Grundebene senkrecht stehende z-Achse. Fig. 2a und Fig.2d verdeutlichen so beispielhaft ein durch die Schicht 23 definiertes dreidimensionales Koordinatensystem mit einer x-Achse, eine y-Achse und einer z-Achse, welche entsprechende Raumrichtungen 61, 62 und 63 definiert. Es ist hierbei auch möglich, dass auch in die oben liegende Oberfläche der Schicht 23 noch Reliefstrukturen abgeformt sind und so die obere Oberfläche der Schicht 23 nicht vollkommen plan ist. In diesem Fall wird die Grundebene durch die planen Bereiche der oberen Oberfläche der Schicht 23 festgelegt.

Das Sicherheitsmerkmal 12 setzt sich aus mehreren Bereichen 31, 32, 33, 34 und 35 zusammen, welche jeweils ein unterschiedliches optisches Erscheinungsbild zeigen. Die Bereiche 31 bis 35 sind weiter von einem Bereich 30 umgeben, welcher vorzugsweise kein optisch variables Erscheinungsbild zeigt. Der Bereich 30 kann insbesondere eine Mattstruktur oder eine Antireflexionsstruktur aufweisen.

In dem Bereich 31 sind in die untere Oberfläche der Schicht 23 eine Vielzahl von Facettenflächen abgeformt, welche im Bereich 31 eine Reliefstruktur 41 ausbilden. Dies gilt ebenso für die Bereiche 32, in dem ebenfalls eine Vielzahl von Facettenflächen in die untere Oberfläche der Schicht 23 abgeformt ist. In den Bereichen 33, 34 und 35 sind jeweils unterschiedliche, diffraktive Reliefstrukturen in die untere Oberfläche der Schicht 23 abgeformt, wobei hier in dem Bereich 33 eine diffraktive Reliefstruktur 42 und in dem Bereich 35 eine diffraktive Reliefstruktur 43 abgeformt ist.

Gemäß einer bevorzugten Ausführungsform ist in einem Teilbereich des ersten Bereichs, welcher nicht mit den Facettenflächen belegt ist, in die erste Schicht eine Hintergrundstruktur abgeformt.

Fig. 2c und Fig. 2d verdeutlichen beispielhaft eine Ausführungsform, bei der der Bereich 31 zum einen eine Vielzahl von Teilbereichen 311 aufweist, welche jeweils mit einer Facettenfläche 50 belegt sind, und weiter einen Teilbereich 312 aufweist, welcher mit einer Hintergrundstruktur 44 belegt ist. Wie in Fig. 2c gezeigt, ist der Teilbereich 312 hierbei vorzugsweise als Hintergrundbereich zu den Facettenflächen 50 ausgeformt.

Als Hintergrundstruktur 44 ist in dem Teilbereich 312 vorzugsweise eine Reliefstruktur in der Schicht 23 abgeformt, die Bewegungs- und/oder Morphingeffekte als zweiten optischen Effekt erzeugt (z.B. als Kinegram^{®}). Derartige Bewegungs- oder Morphing-Effekte sind z.B. in EP 0 375 833 A1 und EP 0 105 099 A1 beschrieben und bezüglich der Ausbildung der Hintergrundstruktur 44 wird auf diese Dokumente verwiesen.

Wie in Fig. 2c gezeigt, ist der Teilbereich 312 in eine Vielzahl von Zonen 322 unterteilt. In jeder der Zonen 322 ist ein vorzugsweise lineares Beugungsgitter abgeformt, wobei sich vorzugsweise die Beugungsgitter benachbarter Zonen 322 zumindest in mindestens einem Gitterparameter, insbesondere in ihrem Azimuthwinkel oder ihrer Spatialfrequenz unterscheiden. Innerhalb der jeweiligen Zone 322 sind die Gitterparameter vorzugsweise nicht variiert. Alternativ kann auch die Orientierung der Gitter oder auch andere Gitterparameter oder Kombinationen von Gitterparametern benachbarter Zonen 322 variiert werden.

Der zweite optische Effekt der Hintergrundstruktur 44 und der erste optische Effekt der Facettenflächen 50 können sich ergänzen. Beispielsweise ist es möglich, mit den Facettenflächen 50 einen "rolling bar"-Effekt zu erzeugen und mit den Hintergrund-struktur 44 einen gegenläufigen Bewegungseffekt zu erzeugen. Da die Strukturgrößen der Facettenflächen 50 und der zwischen diesen angeordneten, mit der Hintergrundstruktur belegten Flächenbereiche unterhalb des Auflösungsvermögens des unbewaffneten Auges liegen, ergeben die beide optische Effekte einen gemeinsamen optischen Effekt aus der Überlagerung beider Einzeleffekte. Dadurch ist es möglich, hier besonders charakteristische optische Effekte zu erzeugen.

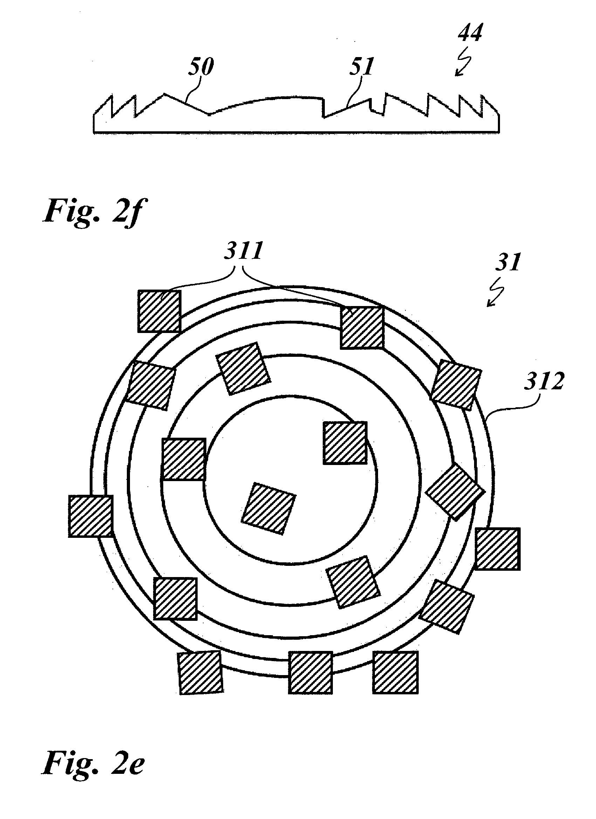

Fig. 2e und Fig. 2f verdeutlicht eine weitere Ausgestaltungsform, bei der in den Teilbereichen des ersten Bereichs, welche nicht mit den Facettenflächen belegt sind, in die erste Schicht eine Reliefstruktur mit Strukturen, wie sie z.B. in EP 1 562 758 B1 beschrieben sind, vorgesehen sind.

Die Bereiche 311, in denen jeweils bevorzugt eine Facettenfläche 50 vorgesehen ist, sind so vorzugsweise von einem Hintergrundbereich 312 umgeben, in den eine derartige Hintergrundstruktur 44 abgeformt ist. Die Hintergrundstruktur generiert einen sogenannten "surface relief"-Effekt, d.h. es werden linsenartig wirkende, diffraktiv und/oder refraktiv wirkende mikroskopische Oberflächenstrukturen erzeugt, die eine makroskopische Dreidimensionalität ähnlich einer refraktiven Verzerrungslinse oder optisch verzerrenden Freiformfläche vortäuschen. Damit lassen sich scheinbar dreidimensional wirkende Strukturen erzeugen, z.B. Ornamente, Symbole, alphanumerische Symbole. Um den "surface relief'-Effekt nicht zu stark mit den Facettenflächen 50 zu beeinträchtigen, sollte die Flächenbelegung durch die Facettenflächen eher gering sein. Typischerweise sollte diese Flächenbelegung unter 70%, bevorzugt unter 50% und besonders bevorzugt unter 30% sein.

In einer ersten Variante dieser Möglichkeit fügen die Facettenflächen 50 einen Glitzereffekt zu dem "surface relief"-Effekt hinzu. Wenn die Facettenflächen 50 mit farb- oder farbeffekt-generierenden Strukturen versehen sind, fügen derartige Facetten sogar farbige oder farbwechselnde Glitzereffekte zu dem "surface relief"-Effekt hinzu. In dieser Variante ist es vorteilhaft, wenn die Flächenbelegung der Facetten noch geringer ist, d.h. weniger als 20% oder sogar weniger als 10%.

Eine andere Variante kombiniert die Funktion F_{SR}(x,y) des "surface relief"-Effekt mit der Funktion F(x,y) der Facettenflächen 50. Die Effekte der "surface relief"-Strukturen und der Facettenflächen 50 können sich ergänzen. Beispielsweise ist es möglich, mit dem "surface relief"-Effekt eine konvexe Linsenfunktion zu erzeugen und mit den Facettenflächen 50 eine konkav wirkende Bewegungsfunktion.

Weiter ist es möglich, dass ein gemäß den Figuren Fig. 2c bis Fig. 2f ausgestalteter Bereich 31 des Sicherheitselements 10 weiter auch mit sonstigen Reliefstrukturen belegter Bereich kombiniert ist und so beispielsweise den Bereich 31 in der Ausführungsform nach Fig. 2a und Fig. 2b bei Beibehaltung der Ausgestaltung der Bereiche 32 bis 35 gemäß Fig. 2a und Fig. 2b ersetzt.

Die Reliefstrukturen 41, 42 und 43 bzw. die Hintergrundstruktur 44 werden hierbei vorzugsweise in ein und demselben Herstellungsprozess, beispielsweise mittels eines Prägewerkzeugs in die Schicht 23 abgeformt, welches eine Oberfläche aufweist, auf welcher die dreidimensionale Negativform oder Komplementärform dieser Reliefstrukturen vorgesehen ist. Die Schicht 23 kann so beispielsweise aus einer thermoplastischen Replizierlackschicht bestehen und als Replizierwerkzeug wird ein wie oben dargestellt ausgeformtes Prägewerkzeug verwendet. Unter Einsatz von Hitze und Druck werden hierbei die Reliefstrukturen 41, 42 und 43 bzw. die Hintergrundstruktur 44 im gleichen Herstellungsprozess unter Einsatz von Hitze und Druck in die untere Oberfläche der Schicht 23 abgeformt. Alternativ ist es auch möglich, dass die Schicht 23 aus einem UV-vernetzbaren Replizierlack besteht und die Reliefstrukturen 41, 42 und 43 bzw. die Hintergrundstruktur 44 mittels des Replizierwerkzeugs und gleichzeitiger und/oder nachfolgender UV-Bestrahlung in die untere Oberfläche der Replizierlackschicht durch UV-Replikation abgeformt wird. Auch hier erfolgt das Abformen der Reliefstrukturen 41, 42 und 43 bzw. die Hintergrundstruktur 44 vorzugsweise mittels ein und desselben Replizierwerkzeugs. Hierdurch wird sichergestellt, dass die Reliefstrukturen 41, 42 und 43 bzw. die Hintergrundstruktur 44 registergenau, d.h. lagegenau in x- und/oder y-Richtung zueinander in die Schicht 23 abgeformt werden und so Registerschwankungen, d.h. Toleranzen in der relativen Lage zueinander, vermieden werden, welche durch das Einbringen der Reliefstrukturen 41, 42 und 43 bzw. die Hintergrundstruktur 44 mittels unterschiedlicher Replizierwerkzeuge und aufeinander folgender Herstellungsprozesse auftreten. Es ist jedoch auch möglich, die Reliefstrukturen der Bereiche 31 - 35 in jeweils aufeinander folgenden Replizierschritten in die Schicht 23 einzubringen.

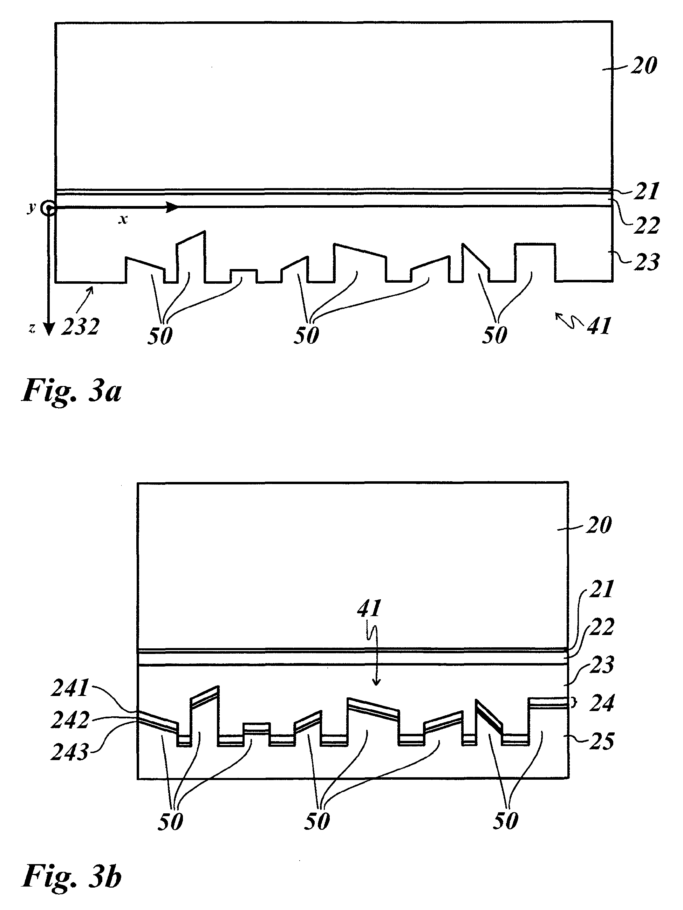

Fig. 3a und 3b verdeutlichen beispielhaft einen möglichen Herstellungsprozess zur Herstellung des Sicherheitselements 10.

Auf eine Trägerfolie 20 wird in aufeinander abfolgenden Schritten zunächst eine Ablöseschicht 21 und sodann die Schutzschicht 22 aufgebracht. Bei der Trägerfolie 20 handelt es sich hierbei vorzugsweise um eine Kunststofffolie mit einer Schichtdicke zwischen 6µm und 300µm. Die Kunststofffolie besteht hierbei vorzugsweise aus PET oder BOPP. Die Ablöseschicht 21 hat vorzugsweise eine Schichtdicke zwischen 0,1 µm und 0,5µm und weist vorzugsweise Wachskomponenten auf. Es ist jedoch auch möglich, auf die Ablöseschicht 21 zu verzichten.

Sodann wird - wie bereits oben beschrieben - die Schicht 23 auf die Schutzschicht 22 aufgebracht und gleichzeitig oder in einem nachfolgenden Schritt in den Bereichen 31 bis 35 die zugehörigen Reliefstrukturen, beispielsweise die Reliefstrukturen 41, 42 und 43 bzw. die Hintergrundstruktur 44 in die freiliegende Oberfläche der Schicht 23 abgeformt. In dem Bereich 30 wird vorzugsweise keine Reliefstruktur in die freiliegende Oberfläche der Schicht 23 abgeformt.

Fig. 3a zeigt nun beispielhaft einen Ausschnitt aus dem Bereich 31, in dem die Reliefstrukturen 41 in die Schicht 23 abgeformt ist. Wie in Fig. 3a gezeigt, werden hierbei in die freiliegende Oberfläche 232 der Schicht 23 eine Vielzahl von Facettenflächen abgeformt. Jede der Facettenflächen hat hierbei eine kleinste Abmessung von mehr als 1 µm und eine größte Abmessung von weniger als 300µm, d. h. eine Breite von mehr als 1µm und eine Länge von weniger als 300µm. Vorzugsweise liegen hierbei die kleinsten Abmessungen der Facettenflächen zwischen 1µm und 20µm, besonders bevorzugt zwischen 1µm und 10µm und die größten Abmessung der Facettenflächen zwischen 5µm und 100µm, bevorzugt zwischen 5µm und 50µm und besonders bevorzugt zwischen 5µm und 30µm.

Bei den Ausführungsbeispielen nach Fig. 2c bis Fig. 2g weist der Bereich 31 jeweils nur eine Facettenfläche 50 auf, die von der Hintergrundstruktur 44 umgeben ist, wie dies beispielsweise in den Figuren 2d und 2f gezeigt ist. Die Facettenflächen 50 der Ausführungsbeispiele nach Fig. 2c bis Fig. 2g sind vorzugsweise wie anhand der Fig. 3a bis Fig. 10c beschrieben ausgeformt und angeordnet, so dass diesbezüglich auf diese Ausführungen verwiesen wird.

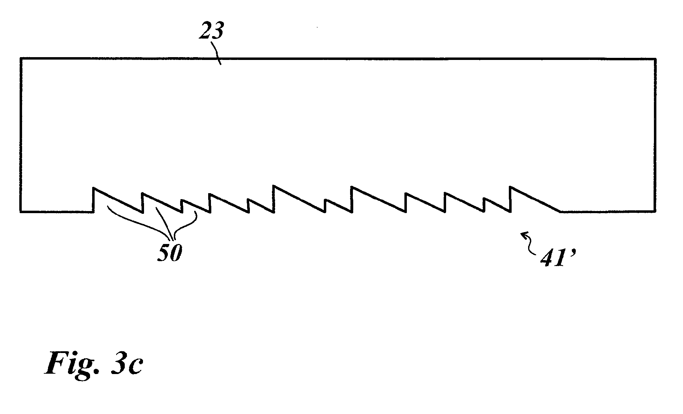

Fig. 3c zeigt einen Ausschnitt einer weiteren Variante, bei der in die Schicht 23 eine Reliefstruktur 41' abgeformt ist. Die Reliefstruktur 41' weist Facettenflächen 50 mit einer Strukturhöhe H_{f} kleiner als 2 µm auf. Hierbei ist die Abmessung der Facettenflächen in Richtung der größten Steigung der Facettenflächen pseudo-zufällig variiert, wobei der Parametervariationswert aus einer pseudo-zufälligen Gruppe von nur drei Parametervariationswerten ausgewählt ist.

Jede der Facettenflächen 50 ist durch die Parameter Form F der Facettenfläche, Flächengröße S der Facettenfläche, Beabstandung H des Flächenschwerpunkts der Facettenflächen von der Grundebene, Position P des Flächenschwerpunkts der Facettenfläche in dem von der x-Achse und der y-Achse abgespannten Koordinatensystem, Neigungswinkel Ax der Facettenfläche um die x-Achse gegen die Grundebene, Neigungswinkel Ay der Facettenfläche um die y-Achse gegen die Grundebene und Azimuthwinkel Az der Facettenfläche, definiert durch den Drehwinkel der Facettenfläche um die z-Achse, bestimmt. Weiter sind in dem Bereich 31 einer oder mehrere der Parameter F, S, H, P, Ax, Ay und Az der in diesem Bereich angeordneten Facettenflächen 50 pseudo-zufällig innerhalb eines für den Bereich 31 vordefinierten Variationsbereich variiert. Ein oder mehrere der vorgenannten Parameter sind so bei jeder der in dem Bereich 31 angeordneten Facettenflächen 50 pseudo-zufällig variiert.

Besonders vorteilhaft ist es hierbei, wenn die Parameter F, S, H, P, Ax, Ay und Az für jede der Facettenflächen 50 wie im Folgenden beschrieben festgelegt wird:
Zunächst werden die Parameter für jede Facettenfläche gemäß einer vordefinierten Funktion festgelegt, welche einen vordefinierten optischen Effekt, beispielsweise eine optisch variable Darstellung einer bestimmten Information bewirkt. Sodann werden ein oder mehrere der so durch diese Funktion vordefinierten Parameter F, S, H, P, Ax, Ay und Az pseudo-zufällig innerhalb eines vordefinierten Variationsbereich bei jeder der Facettenflächen 50 variiert, wodurch beispielsweise der Blickwinkelbereich, die Robustheit oder der Tiefeneindruck des durch die Funktion festgelegten Effekts verbessert und beispielsweise Glanz und Glitzereffekt zugefügt werden. Die Parameter F, S, H, P, Ax, Ay, Az werden so für jede der Facettenflächen 50 in dem Bereich 31 durch eine additive oder multiplikative Überlagerung der durch die vordefinierte Funktion für die jeweilige Facettenfläche vordefinierten Parameter mit einer pseudo-zufälligen Variation eines oder mehrerer dieser Parameter innerhalb eines für den jeweiligen Parameter im Bereich 31 vordefinierten Variationsbereichs bestimmt.

Weiter ist es hierbei auch möglich, dass in dem Bereich 31 neben den Facettenflächen 50 noch weitere Facettenflächen vorgesehen sind, welche nicht die oben spezifizierten Abmessungen besitzen und/oder nicht zufälligerweise in einem ihrer Parameter pseudo-zufällig variiert werden.

In den Bereichen 32 sind in gleicher Weise, wie oben bezüglich des Bereichs 31 beschrieben, eine Vielzahl von Facettenflächen 50 in die Oberfläche 232 der Schicht 23 abgeformt und ein oder mehrere der Parameter F, S, H, P, Ax, Ay, Az pseudo-zufällig variiert. Besonders vorteilhaft ist hierbei, wenn in dem zweiten Bereich ebenfalls die Parameter F, S, H, P, Ax, Ay, Az durch eine vordefinierte Funktion vordefiniert sind und diese vordefinierten Parameter sodann additiv mit der pseudo-zufälligen Variation eines oder mehrere dieser Parameter überlagert wird. Vorteilhaft ist hierbei, wenn sich die vordefinierte Funktion des Bereichs 31 von der vordefinierten Funktion der Bereiche 32 unterscheidet, wodurch bewirkt wird, dass unterschiedliche optische variable Effekte in den Bereichen 31 oder 32 generiert werden. Weiter ist es besonders vorteilhaft, wenn sich die Parameter, die pseudo-zufällig im Bereich 31 einerseits und im Bereich 32 andererseits variiert sind, unterscheiden. Auch dadurch ist ein interessantes, unterschiedliches optisches Erscheinungsbild der Bereiche 31 und 32 zu erzielen. Beispielsweise können die Facettenflächen in Bereich 31 mittels einer Funktion in Form einer konvexen Linse angeordnet sein und in Bereich 32 mittels einer flachen Funktion oder aber mittels einer Funktion in Form einer konkaven Linse. Weiter ist es vorteilhaft, wenn mindestens einer der Variationsbereiche der variierten Parameter im Bereich 31 und im Bereich 32 unterschiedlich gewählt ist und sich hierbei die unterschiedlichen Variationsbereiche insbesondere um mindestens 20%, weiter bevorzugt mindestens 50% unterscheiden. Auch hierdurch ist ein interessantes, unterschiedliches optisches Erscheinungsbild der Bereiche 31 und 32 erzielbar.

In den Bereichen 33 bis 35 sind vorzugsweise diffraktive Reliefstrukturen oder isotrope oder anisotrope Mattstrukturen in die Oberfläche 232 der Schicht 23 abgeformt, welche jeweils einen unterschiedlichen optisch variablen Effekt zeigen. Die in diesen Bereichen abgeformten Reliefstrukturen werden beispielsweise von Beugungsgittern mit einer Spatialfrequenz zwischen 700 Linien/mm bis 5000 Linien/mm, computergenerierten Hologramme, 2D- oder 3D-Hologrammen, oder einem Kinegram^{®} gebildet. Weiter ist es auch möglich, eine Beugungsstruktur nullter Ordnung als Reliefstruktur in einem der Bereiche 33 bis 35 abzuformen.

Bei der Beugungsstruktur nullter Ordnung handelt es sich bevorzugt um eine Reliefstruktur mit einer Beabstandung der einzelnen Strukturelemente im Bereich der Lichtwellenlängen bis halben Lichtwellenlänge für eine Wellenlänge im sichtbaren Wellenlängenbereich (ca. 350nm bis 800nm), welche vorzugsweise mit einer hochbrechenden dielektrischen Reflexionsschicht (HRI-Schicht) versehen ist, zur Generierung eines typischen blickwinkelabhängigen Farbeffekts bei Kippung und/oder Drehung des Sicherheitselements.

Durch das so bewirkte kontrastierende optische Erscheinungsbild der Bereiche 31 bis 35 wird die Fälschungssicherheit des Sicherheitselements 10 deutlich erhöht.

Nach Abformung der Reliefstrukturen 41 bis 43 in die Oberfläche 232 der Schicht 23 wird auf die Oberfläche 232 die Schicht 24 aufgebracht.

Die Schicht 24 umfasst hierbei vorzugsweise ein Dünnfilmschichtsystem, wie dies in Fig. 3b gezeigt ist. Die Schicht 24 weist so beispielsweise eine semi-transparente Absorptionsschicht 241, eine Distanzschicht 242 und eine metallische Reflexionsschicht 243 auf. Bei der Absorptionsschicht 241 handelt es sich vorzugsweise um eine sehr dünne und damit halbtransparente Metallschicht, beispielsweise eine Schicht aus Chrom mit einer Schichtdicke von 5nm. Bei der Distanzschicht 242 handelt es sich um eine Schicht aus einem transparenten Dielektrikum, beispielsweise MgF₂, SiO₂ oder Polymer Die Schichtdicke der Distanzschicht 242 ist hierbei vorzugsweise so gewählt, dass diese für einen definierten Blickwinkel die λ/2- oder λ/4-Bedingung für In im Bereich der Wellenlänge des sichtbaren Lichts erfüllt, d. h. dass die optische Dicke der Schicht 242 im Bereich der halben oder viertel Lichtenwellenlängen liegt und damit bei der Interferenz des von der Grenzfläche zwischen der Absorptionsschicht 241 und der Distanzschicht 242 einerseits und der Grenzfläche zwischen der Distanzschicht 242 und der Reflexionsschicht 243 andererseits rückreflektierten Lichts ein blickwinkelabhängiger Farbverschiebungseffekt im Bereich des für das menschliche Auge sichtbaren Lichts generiert wird.

Bei der Schicht 243 handelt es sich vorzugsweise um eine weitgehend opake Metallschicht, beispielsweise eine Schicht aus Aluminium mit einer Schichtdicke von 30nm.

Untersuchungen haben gezeigt, dass sich durch die Beschichtung der Facettenflächen 50 mit einem Dünnfilmschichtsystem besonders interessante optisch variable Effekte erzielen lassen.

Es ist jedoch auch möglich, dass als Schicht 24 eine reflektierende Metallschicht, beispielsweise aus Al, oder eine HRI-Schicht (HRI= High Refraction Index), beispielsweise ZnS oder TiO₂, aufgebracht wird. Weiter ist es auch möglich, dass die Reflexionsschicht 24 nicht vollflächig auf die gesamte Oberfläche 232 der Schicht 23 aufgebracht wird, sondern lediglich partiell und/oder musterförmig auf die Schicht 232 aufgebracht wird. So ist es beispielsweise möglich, die Schicht 24 lediglich in den Bereichen 31 bis 35 und nicht in dem umgebenen Bereich 30 aufzubringen.

Weiter ist es auch möglich, dass die Schicht 24 auch in den Bereichen 31 bis 34 nicht vollflächig, sondern musterförmig aufgebracht ist, um so beispielsweise eine in Transmission sichtbare Information zu kodieren.

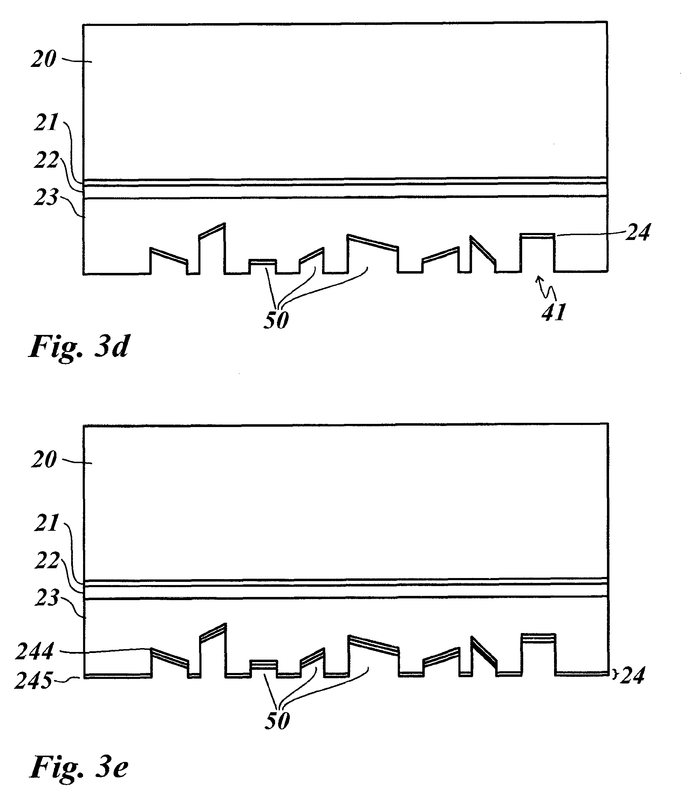

Fig. 3d zeigt ein Beispiel, bei dem in dem Bereich 31 nur in den mit den Facettenflächen 50 belegten Teilbereichen des Bereichs 31 eine metallische Reflexionsschicht, z.B. aus Aluminium oder Kupfer, als Schicht 24 vorgesehen ist, nicht jedoch in den nicht mit den Facettenflächen belegten Teilbereichen des Bereichs 31 vorgesehen ist. Eine derartige partielle Ausformung der Schicht 24 ist auch bei dem Aufbau der Schicht 24 gemäß Fig. 3b möglich.

Gemäß einem bevorzugten Ausführungsbeispiel der Erfindung ist es weiter möglich, dass in den Bereichen 31, 32, 33, 34 und/oder 35 unterschiedliche Schichten 24 auf die Oberfläche 232 der Schicht 23 aufgebracht werden, so beispielsweise im Bereich 31 ein Dünnfilmschichtsystem aufgebracht wird, in den Bereichen 32 eine metallische Reflexionsschicht aufgebracht wird und in den Bereichen 33 bis 35 eine HRI-Schicht als Reflexionsschicht aufgebracht wird. Es ist auch denkbar, in den Bereichen 33 bis 35 eine metallische Reflexionsschicht, z.B. Aluminium, und in den Bereichen 31 und 32 eine andere metallische Reflexionsschicht, z.B. Kupfer, aufzubringen. Dies ermöglicht, die optischen Effekte der Facettenflächen mit den unterschiedlichen Farbeindrücken der beiden metallischen Reflexionsschichten zu kombinieren.

Weiter ist es auch möglich, dass die Schicht 24 in dem Bereich 31 und/oder im Bereich 32 Teilbereiche aufweist, in denen die Schicht 24 unterschiedlich aufgebaut ist, oder von unterschiedlichen Schichten oder unterschiedlichen Kombinationen von Schichten gebildet ist.

Fig. 3e zeigt ein Beispiel, bei dem in den Bereichen 31 und 32 nur auf den Facettenflächen 50 eine metallische Reflexionsschicht 244, z.B. Aluminium, vorgesehen ist. Weiter ist auf der gesamten Oberfläche des Mehrschichtkörpers, d.h. in den Bereichen 31, 32 sowie 33, 34 und 35 sowie insbesondere auch auf den Facettenflächen 50 als auch benachbart zu den Facettenflächen 50, eine zusätzliche weitere, vorzugsweise transparente oder transluszente Reflexionsschicht 245 aufgebracht, beispielsweise aus einem HRI-Material wie beispielsweise ZnS oder TiO₂.

Weiter ist es auch möglich, dass innerhalb der Bereiche 31 und 32 eine reflektierende Schicht 24 aufgebracht ist, die in Teilbereichen der Bereiche 31 und 32 unterschiedlich aufgebaut ist, oder dass dort lediglich die Facettenflächen und nicht die die Facettenflächen umgebenen Bereiche der Oberfläche 232 mit der reflektierende Schicht 24 versehen sind.

Anschließend wir auf die Schicht 24 die Kleberschicht 25 aufgebracht, wie dies in Fig. 3b gezeigt ist.

Zur Applikation des Sicherheitselements 10 auf das Trägersubstrat 11 wird die Transferfolie nach Fig. 3b auf das Trägersubstrat 10 aufgebracht, die Kleberschicht 25 beispielsweise durch Hitze und Druck aktiviert und sodann die Trägerfolie 20 abgezogen, sodass ein Mehrschichtkörper mit dem in Fig. 2b gezeigten Schichtaufbau auf dem Trägersubstrat 11 verbleibt.

Weiter ist es natürlich auch möglich, dass das Sicherheitselement 10 neben den in Fig. 2b gezeigten Schicht auch ein oder mehrere weitere Schichten umfasst, beispielsweise noch ein oder mehrere weitere Dekorschichten, Reflexionsschichten, Schichten aus einem magnetischen Material, usw. So ist es möglich, dass das Sicherheitselement 10 als Laminierfolie ausgebildet ist und anstelle der Schutzschicht 22 eine Trägerfolie vorgesehen ist, welche vorzugsweise mit einer Haftvermittlungsschicht mit der Schicht 23 verbunden ist.

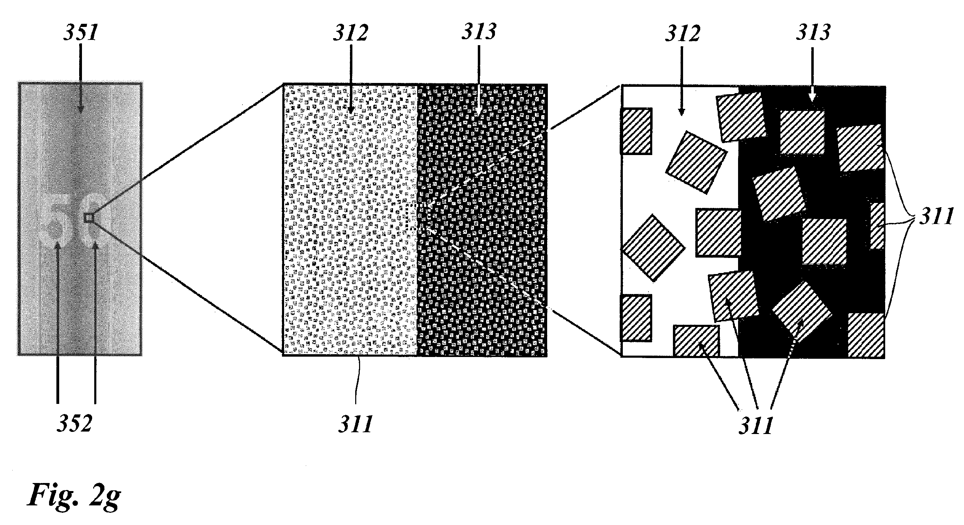

Eine weitere Ausführungsform wird im Folgenden anhand von Fig. 2g erläutert: Wie in Fig. 2g schematisch dargestellt, wird mit den Facettenflächen 50 ein erster optischer Effekt, z.B. "rolling bar"-Effekt erzeugt und dieser mit einer flächenbereichsweisen Demetallisierung eines Teilbereichs 312 des ersten Bereichs ohne Facettenflächen 50 zur lokalen Entfernung der insbesondere metallischen und opaken Reflexionsschicht kombiniert (in Form einer Zahl "50").

Wie in Fig. 2g gezeigt, weist der Bereich 31 somit eine Vielzahl von Teilbereichen 311 auf, welche jeweils von der von einer Facettenfläche belegten Fläche gebildet sind und die mit einer Reflexionsschicht, vorzugsweise eine metallischen Reflexionsschicht belegt sind. Weiter ist der Hintergrundbereich zu den Teilflächen 311 in einen ersten Teilbereich 313 und einen zweiten Teilbereich 312 geteilt. Der erste Teilbereich 313 ist ebenfalls mit der Reflexionsschicht belegt, insbesondere mit der metallischen Reflexionsschicht belegt. Der zweite Teilbereich 312 ist nicht mit der Reflexionsschicht belegt, vorzugsweise demetallisiert. Im Bereich der "50er" sind die Teilbereiche 311 so von den Teilbereichen 312 umgeben und außerhalb der "50" von dem Teilbereich 313 umgeben.

So weist ein derartiger Mehrschichtkörper einen ersten optischen Effekt 351 in Reflexion und einen zweiten optischen Effekt 352 in Transmission auf. In Reflexion erscheint der "rolling bar"-Effekt als erster optischer Effekt mit voller Intensität über den gesamten Bereich, da alle Facettenflächen mit der Reflexionsschicht versehen sind. Wird nun der Mehrschichtkörper beispielsweise in ein Fenster integriert, so zeigt sich zusätzlich in Transmission betrachtet die Zahl "50" als zweiter optischer Effekt 352, da die bereichsweise entfernte metallische Reflexionsschicht dabei als Schattenmaske wirkt.

Die Demetallisierung zur Entfernung der metallischen Reflexionsschicht kann hierbei beispielsweise mit Hilfe den zuvor beschriebenen Demetallisierungs-Strukturen oder mittels bekannter Ätzverfahren oder Waschverfahren zur lokalen Entfernung von Metallschichten erfolgen.

Ein "rolling bar"-Effekt ist ein optischer Effekt ähnlich einer reflektierenden Zylinderlinse. Dabei erscheinen die Bereiche der Zylinderlinse, welche das Licht in die Richtung eines Beobachters reflektieren heller, als die Bereiche, welche das Licht in andere Richtungen reflektieren. Somit erzeugt diese Funktion eine Art "Lichtband", welches scheinbar über die Zylinderlinse wandert, wenn der Mehrschichtkörper in Richtung des Blickwinkels gekippt wird.

Die Parameter der Facettenflächen 50 werden im Bereich 31 bevorzugt gemäß einem der im Folgenden beschriebenen Verfahren festgelegt:

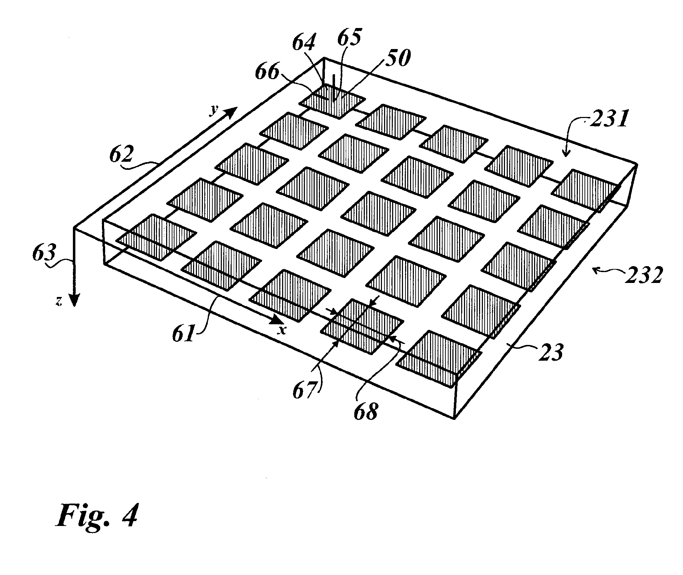

Fig. 4 verdeutlicht ein Modell der Schicht 23 im Bereich 31 mit der oberen Oberfläche 231 und einer Vielzahl in die untere Oberfläche 232 abgeformten Facettenflächen 50. Durch die obere Oberfläche 231 der Schicht 232 wird ein Koordinatensystem mit den Koordinatenachsen x, y und z festgelegt, welches die zugehörigen Raumrichtungen 61, 62 und 63 definiert. Wie in Fig.4 gezeigt, sind die Facettenflächen 50 gemäß einem regelmäßigen 2-dimensionalen Raster angeordnet, welches durch die x- und y-Achse des Koordinatensystems aufgespannt ist. Dieses Rasters definiert für jeden Flächenschwerpunkt 66 der Facettenflächen 50 eine Regelposition 65 in der von der x-Achse und y-Achse aufgespannten Grundebene. Die Rasterweite des Rasters in der Richtung 61 und der Richtung 62 ist hierbei vorzugsweise konstant gewählt. Weiter ist es auch bevorzugt, dass die Rasterweite des Rasters in der Richtung 61 und der Richtung 62 übereinstimmt. Die die Parameter F, S, H, P, Ax, Ay und Az der Facettenflächen bestimmende Funktion ist in Fig. 4 jeweils eine Konstante.

Die Facettenflächen weisen jeweils eine Breite 67 und eine Länge 68 auf, wobei unter Breite allgemein die kleinste Abmessung zweier gegenüberliegender Randpunkte einer Facettenfläche und unter Länge die größte Abmessung zwischen zwei Rankpunkten einer Facettenfläche verstanden wird. Die Facettenflächen können eine beliebige Formgebung besitzen, beispielsweise die Form eines Quadrats, eines Rechtecks, eines regelmäßigen Polygons, eines zufälligen Polygons, einer Kreisscheibe oder eines Kegelschnittes besitzen. Als besonders vorteilhaft hat sich hier der Einsatz von Facettenflächen mit einer kreisscheibenförmigen oder kegelschnittförmigen Form F erwiesen.

Weiter ist es vorteilhaft, die Form der Facettenflächen 50 als verborgenes Sicherheitsmerkmal zu nutzen. So ist es beispielsweise möglich, die Facettenflächen 50 in Form von Buchstaben oder Symbolen, beispielsweise dem Umriss eines Landes, eines charakteristischen Bergs oder Sees, oder Kombinationen oder Überlagerungen davon, zu wählen.

Die Oberfläche der Facettenfläche 50 ist in der in Fig. 4 gezeigten Ausführungsform vorzugsweise flach ausgebildet.

In der Darstellung gemäß Fig. 4 weisen die Facettenflächen 50 allesamt die gleiche Form F und Flächengröße S auf. Es ist jedoch auch möglich, dass die Flächengröße S und/oder Form F der Facettenflächen 50 im Bereich 31 variiert, beispielsweise zufällig variiert wird oder sich von Facettenfläche zu Facettenfläche gemäß der vordefinierten Funktion unterscheidet, um so beispielsweise durch Variation der Flächengröße S eine spezielle optische Information, beispielsweise ein Graustufenbild zu generieren.

Gleiches gilt für die Beabstandung 64 des Flächenschwerpunkts 65 der Facettenflächen 50 von der durch die x-Achse und die y-Achse festgelegte Grundebene. Auch dies kann durch die vordefinierte Funktion zur Generierung einer vorgegebenen optischen Information vordefiniert sein, pseudo-zufällig variiert sein oder durch eine additive Verlagerung des gemäß der vordefinierten Funktion vorgesehenen Wertes mit einer pseudo-zufälligen Variation des Parameters festgelegt sein.

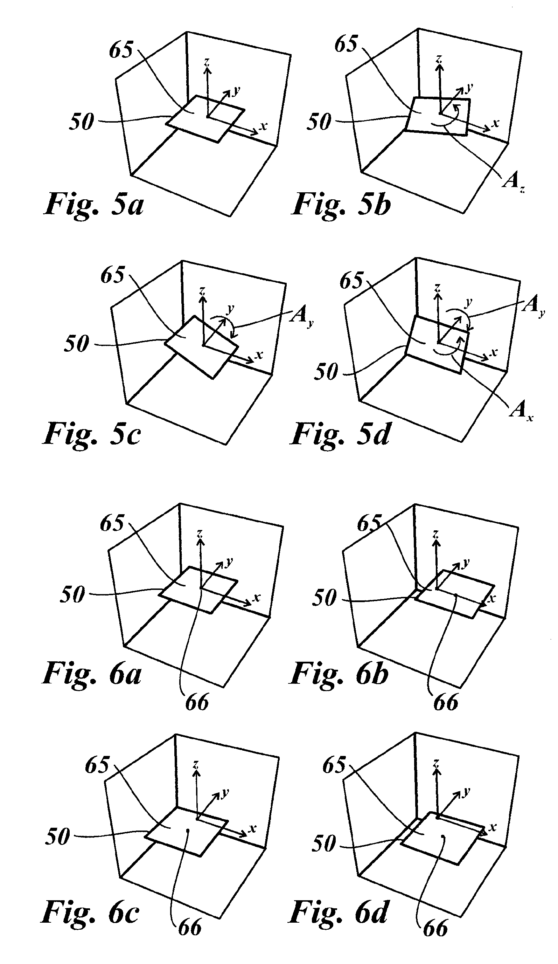

Weitere mögliche Variationen der Parameter der Facettenflächen 50 werden anhand der folgenden Figuren Fig. 5a bis Fig. 6d erläutert:
Fig. 5a bis Fig. 5d zeigen jeweils die räumliche Anordnung einer Facettenfläche 50 mit dem Flächenschwerpunkt 65. In der Darstellung nach Fig. 5b wird die Facettenfläche 50 aus der in Fig. 5a gezeigten Ausgangsposition um die auf der Grundebene senkrecht stehende z-Achse verdreht und somit der Azimuthwinkel Az der Facettenfläche 50 verändert. In der Darstellung nach Fig. 5c wird die Facettenfläche 50 gegenüber der in Fig. 5a gezeigten Ausgangsposition um die y-Achse gekippt und so der Neigungswinkel Ay der Facettenfläche um die x-Achse gegen die Grundebene verändert. In der Darstellung nach Fig. 5d wird die Facettenfläche 50 gegenüber der Ausgangsposition nach Fig. 5a sowohl um die x-Achse als auch um die y-Achse gekippt und so sowohl der Neigungswinkel Ax der Facettenfläche 50 um die x-Achse gegen die Grundebene als auch der Neigungswinkel Ay der Facettenfläche um die y-Achse gegen die Grundebene geändert.
Fig. 6a zeigt die Facettenfläche 50 in einer Ausgangsposition, in der der Flächenschwerpunkt 66 der Facettenfläche 50 mit der durch das Raster festgelegten Regelposition 65 der Facettenfläche übereinstimmt. In der Darstellung nach Fig. 6b wird die Position der Facettenfläche 50 in der von der x- und y-Achse aufgespannten Grundebene dahingehend variiert, dass der Flächenschwerpunkt in Richtung der x-Achse gegenüber der Regelposition 65 verschoben wird. Fig. 6c zeigt eine entsprechende Darstellung, bei der der Flächenschwerpunkt der Facettenfläche 50 in Richtung der y-Achse gegenüber der Regelposition 65 verschoben ist. Fig. 6d zeigt eine Darstellung, bei der der Flächenschwerpunkt 66 der Facettenfläche 50 sowohl in Richtung der x-Achse als auch in Richtung der y-Achse aus der Regelposition 65 verschoben ist.

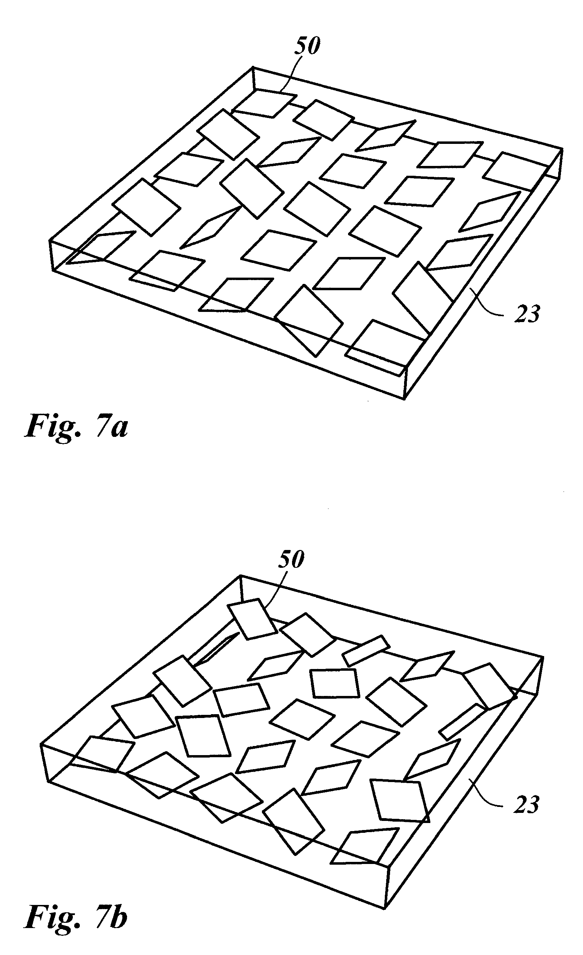

Fig. 7a zeigt nun eine Ausführungsform, bei der der Neigungswinkel Ay der Facettenflächen 50 in dem gezeigten Bereich pseudo-zufällig in einem Variationsbereich von -45° bis +45° variiert ist und die Darstellung nach Fig. 7b eine Ausführungsform, bei der sowohl der Neigungswinkel Ax als auch der Neigungswinkel Ay in einem Variationsbereich zwischen -45° und +45° variiert ist. Durch diese pseudo-zufällige Variation werden insbesondere ein matter Glanz sowie ein Glitzereffekt generiert, wobei der Blickwinkelbereich, in dem diese Effekte sichtbar sind, in dem Ausführungsbeispiel nach Fig. 7b größer als bei dem nach Fig. 7a ist.

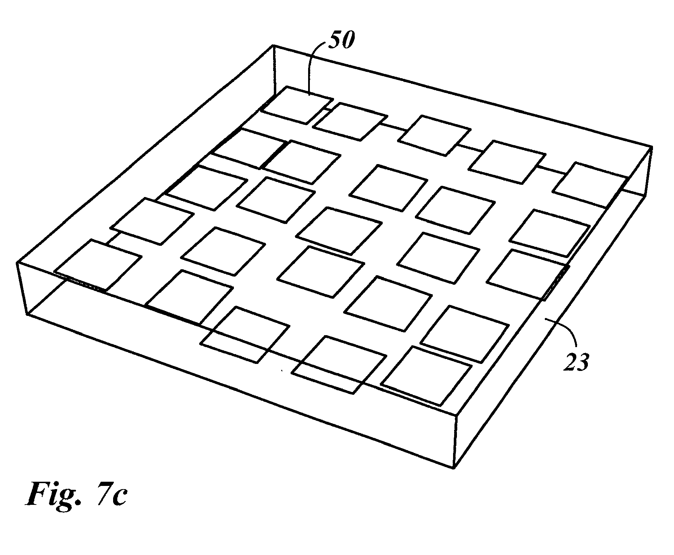

Fig. 7c zeigt eine Ausführungsform, bei der die Positionen P der Flächenschwerpunkte der Facettenfläche 50 in dem von der x-Achse und der y-Achse aufgespannten Koordinatensystem pseudo-zufällig variiert sind. Hierbei ist in dem dargestellten Bereich die Position P jeder der Facettenflächen 50 durch eine pseudo-zufällige Verschiebung in Richtung der x-Achse sowie durch eine pseudo-zufällige Verschiebung in Richtung der y-Achse aus der jeweiligen Regelposition 65 variiert, wie dies oben bereits anhand von Fig. 6d erläutert worden ist.

Ist beispielsweise die Rasterweite des Rasters so gewählt, dass die Rasterweite in x-Richtung dem 1 ½-fachen der Abmessung der Facettenfläche 50 in x-Richtung und die Rasterweite in y-Richtung dem 1½-fachen der Abmessung der Facettenfläche 50 in y-Richtung entspricht, so wird der Variationsbereich der zufälligen Verschiebung in x-Richtung vorzugsweise zwischen -Dx/2 und +Dx/2 und der Variationsbereich der zufälligen Verschiebung in y-Richtung zwischen -Dy/2 und +Dy/2 gewählt ist, wobei Dx die Abmessung 68 der Facettenfläche 50 in x-Richtung und Dy die Abmessung 67 der Facettenfläche in Richtung der y-Achse ist.

Untersuchungen zeigen, dass durch die pseudo-zufällige Variation der Position P weiter auch die optische Brillanz des optisch variablen Effekts verbessert wird. Ferner kann auch das Entstehen von Geisterbildern, ungewollten, z.B. diffraktiven, Farberscheinungen und Ähnlichem vermieden werden.

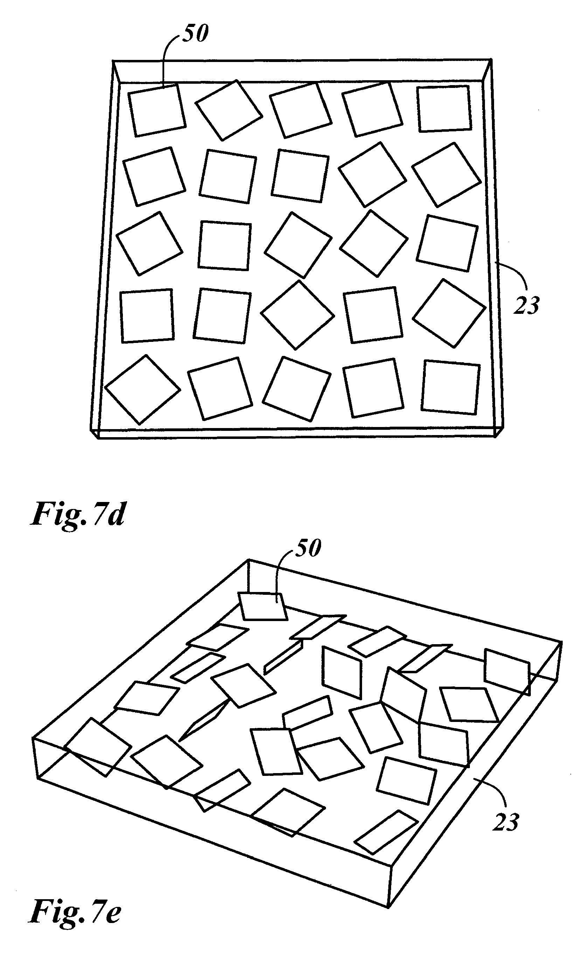

Fig. 7D zeigt eine Ausführungsform, bei der der Azimuthwinkel Az der Facettenflächen 50 pseudo-zufällig variiert ist. Der Variationsbereich des Azimuthwinkels Az wird hierbei bevorzugt zwischen -45° und +45° gewählt.

Fig. 7e zeigt eine Ausführungsform, bei der die Parameter P, Ax, Ay und Az pseudo-zufällig in dem dargestellten Bereich variiert sind.

Wie bereits oben ausgeführt, werden die Parameter der Facettenflächen 50 vorzugsweise durch eine additive oder multiplikative Überlagerung der Werte für die jeweiligen Parameter gemäß einer vordefinierten Funktion, welche einen zu erzielenden optisch variablen Effekt definiert, mit einer pseudo-zufälligen Variation eines oder mehrerer der Parameter innerhalb des vordefinierten Variationsbereich bestimmt. Vorzugsweise wird hierzu wie folgt vorgegangen:
Es wird zuerst die Position P der Facettenfläche 50 ermittelt, d. h. die x-, y-Position des Flächenschwerpunkts der Facettenfläche bestimmt. Sodann wird die lokale Normale der vordefinierten Funktion an diesem Punkt x, y ermittelt und als Normale der Facettenfläche 50 in diesem Punkt übernommen und damit die Neigungswinkel Ax und Ay der Facettenflächen festgelegt. Sodann wird der Gradient der Funktion in diesem Punkt x, y venivendet, um die Orientierung der Facettenflächen und damit den Azimuthwinkel der Facettenflächen Az in dem Punkt x, y zu bestimmen. Die übrigen Parameter werden durch die Funktion vorzugsweise auf konstante Werte gesetzt. Wie bereits oben dargelegt, ist hierbei auch vorteilhaft, dass der Parameter S zur Generierung eines Graustufenbildes variiert wird. Sodann werden die so festgelegten Parameter dieser Facettenflächen 50 additiv mit der pseudo-zufälligen Variation eines oder mehr der Parameter der Facettenflächen überlagert, wie bereits oben dargelegt. So wird beispielsweise die Position P pseudo-zufällig wie in Fig. 7a gezeigt variiert und die Neigungswinkel Ax und Ay, wie in Fig. 7b gezeigt, pseudo-zufällig variiert.

So wird beispielsweise erst ein Funktion F(x,y) vordefiniert, welche eine vordefinierte optische Information, insbesondere eine vordefinierte optisch variable Information beinhaltet. Für jede der Regelpositionen in dem von der x-Achse und y-Achse aufgespannten Raster nach Fig.4, bei der die Funktion (x,y) eine Konstante ist und der Normalenvektor stets parallel zur z-Achse ist, wird nun in dem Bereich 31 zumindest der Neigungswinkel Ax und Ay der der jeweiligen Regelposition zugeordneten Facettenfläche wie oben dargelegt berechnet. Neben den Neigungswinkeln Ax und Ay kann noch optional der Azimuthwinkel Az, die Beabstandung H des Flächenschwerpunkts von der Grundebene sowie die Flächengröße S der jeweiligen Facettenflächen und gegebenenfalls auch die Form F der Facettenflächen durch die Funktion F(x,y) individuell bestimmt sein. Die Beabstandung H kann so beispielsweise aus der Beabstandung des jeweiligen Punktes von einer Referenzfläche (ggf. auch unter zusätzlicher Verknüpfung mit einer Modulo-Funktion) und die Flächengröße S durch einen dem jeweiligen Punkt zugeordneten Helligkeitswert bestimmt werden. Anschließend wird die Position der jeweiligen Facettenflächen wie oben dargelegt optional pseudo-zufällig variiert und sodann die entsprechenden Berechnungen für die nachfolgende Facettenfläche 50 durchgeführt.

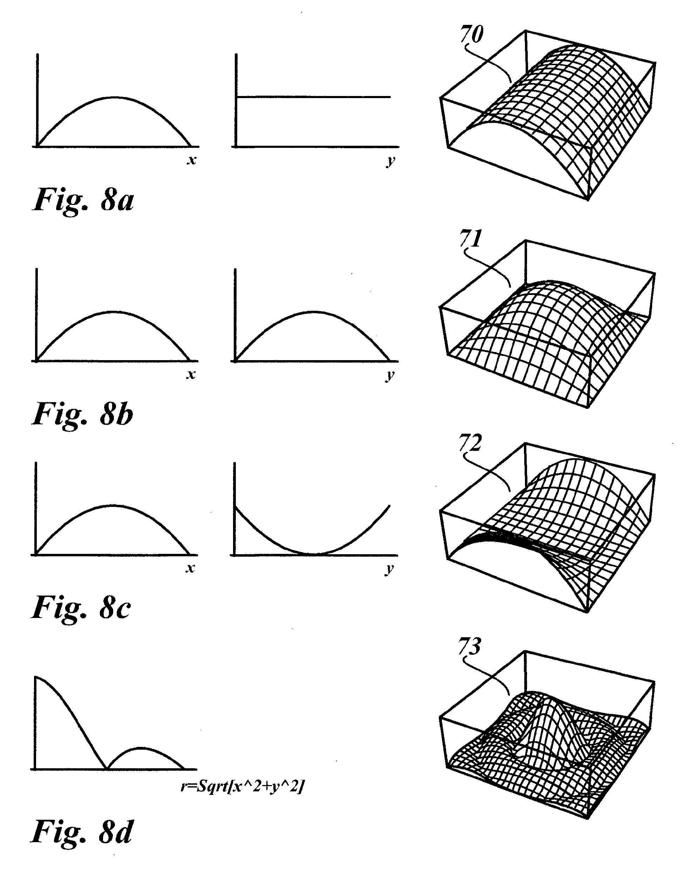

Die Figuren Fig. 8a bis Fig. 8e verdeutlichen nun beispielhaft mehrere derartige vordefinierte Funktionen F(x,y), wobei unter einer derartigen Funktion, wie dies am Beispiel der Figur 8d gezeigt ist, auch ein gemäß einem zylindrischen Koordinatensystem definierten Funktion zu verstehen ist.

Die anhand Fig. 8a verdeutlichte Funktion F(x,y) generiert einen optischen "rolling bar" Effekt ähnlich einer reflektierenden Zylinderlinse. Dabei erscheinen die Bereiche der Zylinderlinse, welche das Licht in die Richtung eines Beobachters reflektieren heller, als die Bereiche, welche das Licht in andere Richtungen reflektieren. Somit erzeugt diese Funktion eine Art "Lichtband", welches scheinbar über die Zylinderlinse wandert, wenn der Mehrschichtkörper in Richtung des Blickwinkels gekippt wird. Die anhand Fig. 8b verdeutlichte Funktion F(x,y) generiert einen einer reflektierenden sphärischen Linse ähnlichen optisch variablen Effekt. Die anhand Fig. 8c verdeutlichte Funktion F(x,y) generiert einen sich aus den konvexen und konkaven reflektierenden Flächen ergebenden Verzerrungseffekt. Die in Fig. 8d, dort beschriebene, anhand eines zylindrischen Koordinatensystems verdeutlichte, Funktion F(x,y) generiert einen radialen Expansions-Bewegungseffekt.

Die Funktion F(x,y) beschreibt so vorzugsweise die Form einer dreidimensionalen Freiformfläche, beispielsweise die in den Figuren Fig. 8a bis Fig. 8e gezeigten Flächen 70 bis 74. Wie bereits oben dargelegt werden hierbei die Neigungswinkel Ax und/ oder Ay durch die jeweilige Flächennormale dieser dreidimensionalen Freiformfläche im Flächenschwerpunkt der jeweiligen Facettenfläche bestimmt.

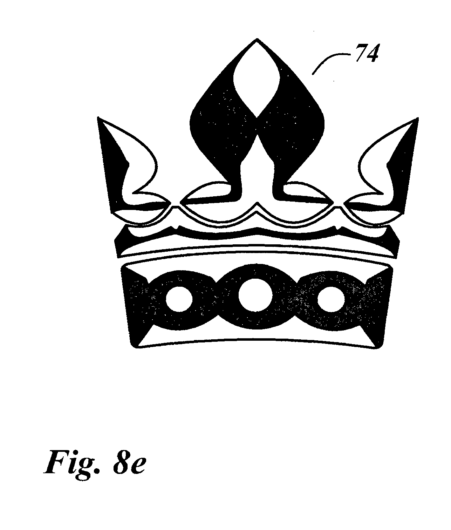

Es ist weiter möglich, dass die Funktion F(x,y) ein Logo, ein Bild, ein alphanumerisches Zeichen, eine geometrische Figur oder ein sonstiges Objekt zugrunde liegt oder die Funktion F(x,y) den Ausschnitt einer Oberfläche eines dreidimensionalen Objekts beschreibt. Dies ist beispielsweise in Fig. 8e gezeigt. Fig. 8e zeigt so die Darstellung einer durch eine vordefinierte Funktion F(x,y) bestimmten Freiformfläche in Form einer dreidimensional gestalteten Krone.

Hierbei kann die dreidimensionale Freiformfläche vorzugsweise auch dadurch definiert werden, dass ein vorgegebenes zweidimensionales Logo, Bild oder Buchstabe als Ausgangspunkt genommen wird und von den Umrisslinien eines derartigen zweidimensionalen Objekts linsenartig ansteigend, d.h. ähnlich der Krümmung einer stetig gekrümmten optischen Linse, zum jeweiligen Flächenschwerpunkt eine Freiformfläche definiert wird, welche vorzugsweise dem Umriss des zweidimensionalen Ausgangsobjekts folgt und - aufgrund der linsenartig ausgebildeten Erhebung - einen linsenartigen Vergrößerungs-, Verkleinerungs- oder Verzerrungseffekt zeigt. Dies wird beispielsweise auch dadurch erreicht, dass eine eine Linsenfunktion erbringende dreidimensionale Fläche, z.B. die Fläche 71, entsprechend den zweidimensionalen Umrisslinien geometrisch transformiert wird.

Besonders vorteilhaft ist es hierbei, wenn die Freiformfläche, wie dies in den Figuren Fig. 8a - Fig. 8d gezeigt, ist von einer stetigen und differenzierbaren Funktion gebildet wird und sich aus ebenen und gekrümmten Flächenbereichen zusammensetzt. Die Maxima der Freiformfläche in Richtung der z-Achse sind in Bezug auf ihre jeweilige Projektion auf die Grundebene vorzugsweise zwischen 4mm und 40mm, weiter bevorzugt zwischen 8mm und 20mm, voneinander entfernt.

Die Freiformfläche kann hierbei ein oder mehrere Freiformelemente umfassen, welche beispielsweise jeweils wie oben dargelegt aus einem zweidimensionalen Objekt oder der Abtastung eines Ausschnitts einer Oberfläche eines dreidimensionalen Objekts bestimmt worden sind. Die kleinste Abmessung jedes dieser Freiformelemente beträgt vorzugsweise zwischen 2mm und 40mm, weiter bevorzugt zwischen 4mm und 20mm.

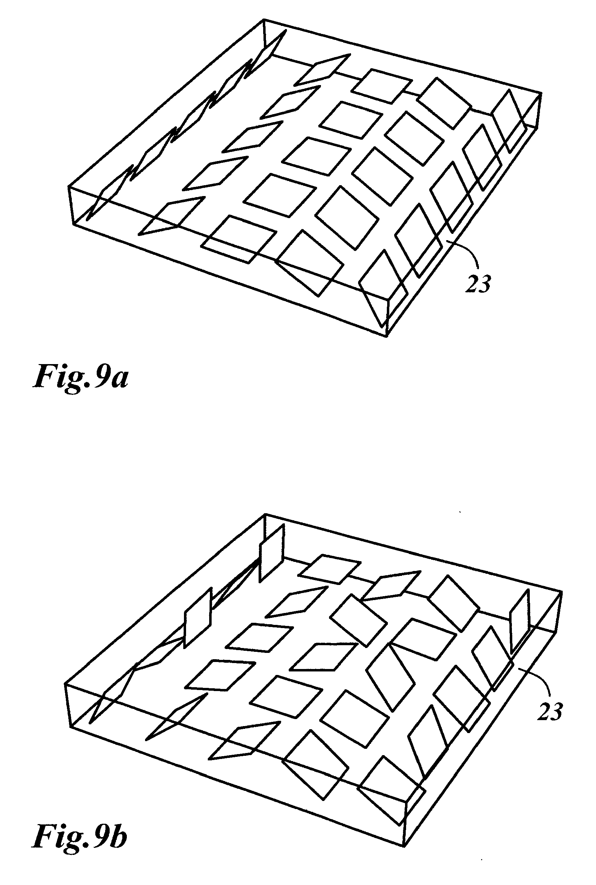

Die Fig. 9a bis Fig. 9d verdeutlichen die Durchführung der Schritte zur Bestimmung der Parameter der Facettenflächen 50 anhand einer vordefinierten Funktion F(x,y), welche eine parabolische Freiformfläche gemäß Fig. 8a beschreibt, die einen "rolling bar"-Effekt als optisch variable Information (bei entsprechender Auslegung der Freiformfläche mit Reflexionsschicht zur Betrachtung in Reflexion/Auflicht) generiert.

In einem ersten Schritt werden die Facettenflächen 50 mit in ihrer jeweiligen Regelposition positioniert und die Neigungswinkel Ax und Ay der jeweiligen Facettenflächen entsprechend der Flächennormale der durch die Funktion F(x,y) beschriebenen dreidimensionalen Freiformflächen in dem jeweiligen Flächenschwerpunkt der Facettenflächen 50 bestimmt, wie dies in Fig. 9a gezeigt ist.

In einem nächsten Schritt wird der Neigungswinkel Ay mit einer pseudo-zufälligen Variation des Neigungswinkel Ay überlagert, wie dies in Fig. 9b gezeigt ist. Der Variationsbereich dieser pseudo-zufälligen Variation wird hierbei bevorzugt zwischen 20% und 80% der mittleren Steigung der Funktion F(x,y) gewählt.

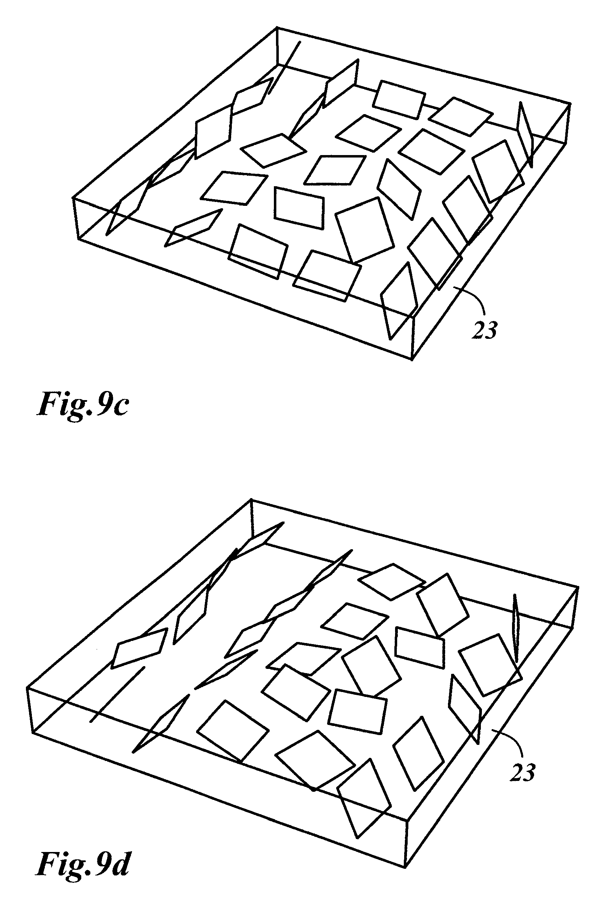

Anschließend wird der Azimuthwinkel Az der Facettenflächen pseudo-zufällig variiert, wie dies in Fig. 9c gezeigt wird.

Anschließend wird die Position P der Facettenflächen pseudo-zufällig durch eine pseudo-zufällige Verschiebung aus derjeweiligen Regelposition variiert, wie dies in Fig. 9d gezeigt ist.

Hierdurch wird ein optisch variabler "rolling bar"-Effekt erzielt, bei dem die dargestellte Line weiter Glanz-, Mattglanz- und Glitzereffekte aufweist und der optisch variable Effekt in einem breiteren Blickwinkelbereich und damit robust, d.h. unter verschiedensten Betrachtungs- und Beleuchtungsbedingungen sichtbar ist.

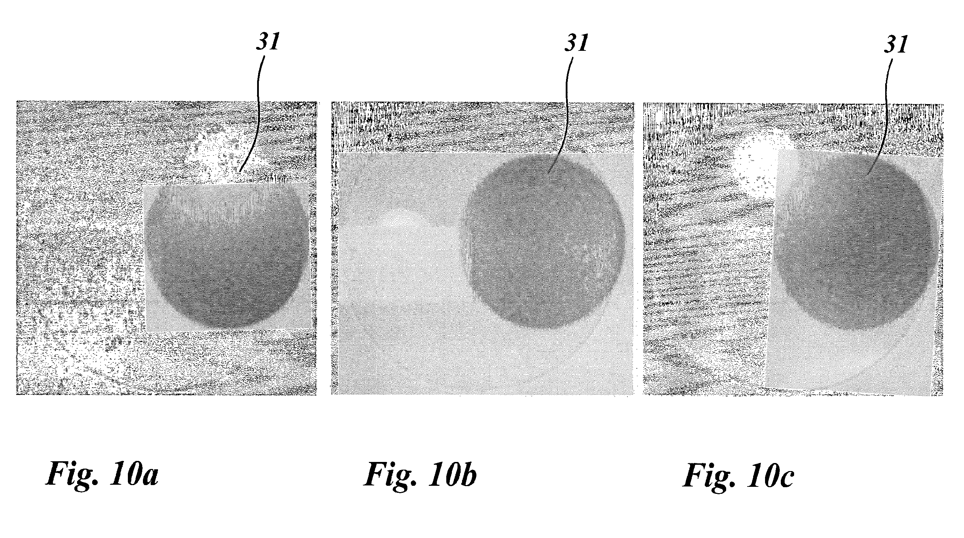

Fig. 10a bis Fig. 10c zeigen Photographien des Bereichs 31 aus unterschiedlichen Betrachtungswinkeln, bei einer entsprechenden Wahl der Funktion F(x,y) als sphärische Linse gemäß Fig. 8b.

Die oben dargestellten Ausführungsbeispiele weisen einen Füllfaktor, ein Verhältnis des von Facettenflächen bedeckten Bereichs des Bereichs 31 zu dem Gesamtbereich des Bereichs 32 auf, welcher zwischen 80% und 50% liegt. Damit wird der optisch variable Eindruck vorteilhafterweise in einem bestimmten Betrachtungsbereich noch von einem optischen Eindruck überlagert, welcher von den nicht mit Facettenflächen belegten Bereichen des Bereichs 31 gebildet wird. Um auf hohe Belegungsdichten mit Facettenflächen zu kommen, kann es notwendig sein, bei der Generierung der Anordnung der Facettenflächen in der Masterstruktur Korrekturschritte einzubauen. Beispielsweise kann der Algorithmus nach einem ersten Durchlauf zur Anordnung der Facettenflächen einen Suchschritt vorsehen, welcher nach zufällig entstandenen Flächen sucht, die keine Facettenflächen aufweisen, aber groß genug wären, um Facettenflächen aufzunehmen. In diese Flächen kann der Algorithmus dann weitere Facettenflächen platzieren, insbesondere einpassen.

Weiter ist es auch vorteilhaft, den Füllfaktor so zu wählen dass die nicht mit Facettenflächen belegten Bereiche zum optischen Gesamteindruck keinen höheren Beitrag leisten, als die übrigen Orientierungen den Facettenflächen 50.

Zur Erhöhung des Füllfaktors kann hierzu einerseits die Beabstandung der Facettenflächen zueinander verringert werden oder eine Überlagerung von Facettenflächen zugelassen werden. Vorzugsweise wird hierzu die Rasterweite des Rasters zwischen dem 0,8-fachen und dem 1,5-fachen der Abmessung der Facettenflächen in die jeweilige Richtung gewählt.

Weiter ist es auch vorteilhaft, hierzu die Anzahl der Parametervariationswerte der Neigungswinkel Ax und Ay zu reduzieren.

Weiter ist es möglich, dass die Oberflächen der Facettenflächen auch mit einer der folgenden Strukturen vollflächig oder teilflächig belegt sind:
Mattstrukturen, welche dazu beitragen, das Licht zu streuen und den Blickwinkelbereich zu vergrößern. Diese Mattstrukturen können das Licht isotrop oder anisotrop streuen. Die anisotropen Mattstrukturen können auf allen Facettenflächen gleich ausgerichtet sein und streuen in diesem Fall das Licht in etwa den gleichen Raumwinkelbereich.

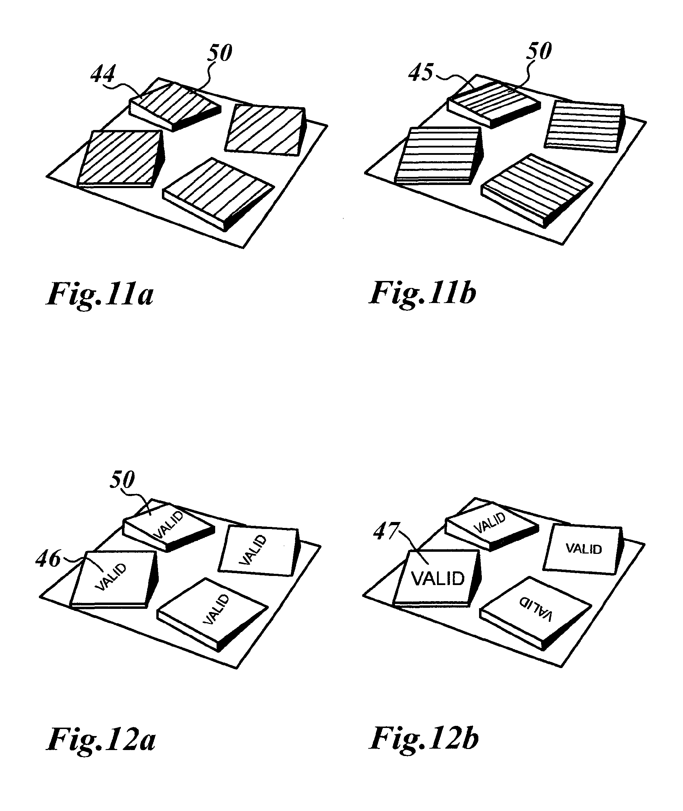

Diffraktive Strukturen, beispielsweise sinusförmige, rechteckige oder sägezahnförmige Gitter. Die Gitter können linear, gekreuzt oder hexagonal sein. Bevorzugt weisen diese diffraktiven Strukturen Gitterperioden im Bereich von 200nm bis 2000nm auf. Ferner ist die Strukturtiefe bevorzugt im Bereich von 20nm bis 2000nm. Wie in Fig. 11 a gezeigt, können diese Beugungsgitter vollflächig auf der jeweiligen Facettenfläche vorgesehen sein. Ferner können die Gitterlinien aller Facettenflächen parallel zueinander ausgerichtet sein, unabhängig von der Orientierung der Facettenflächen. Es ist jedoch auch möglich, wie dies in Fig. 11b gezeigt ist, dass der Azimuthwinkel der diffraktiven Gitter in Richtung des Azimuthwinkels derjeweiligen Facettenfläche 50 orientiert ist. Diffraktive Strukturen, z.B. ein insbesondere musterförmig angeordnetes diffraktives Liniengitter mit 500 bis 5000 Linien/mm, können beispielsweise auch dazu dienen, die Moleküle einer Flüssigkristallschicht auf der diffraktiven Struktur auszurichten zur Einstellung der Polarisationseigenschaften des Flüssigkristallmaterials.

Mottenaugenstrukturen reduzieren die Reflexion an der Grenzfläche zwischen den Facetten und dem umgebenden Medium. Es gibt auch andere Strukturen, welche diesen Effekt erzeugen, beispielsweise lineare Subwellenlängen-Gitter mit einer Periode von bevorzugt <200nm. All diese Arten von Strukturen lassen sich dafür einsetzen, die Helligkeit des Bereichs mit den Facettenstrukturen gezielt einzustellen. Es ist auch denkbar, im Bereich 31 Facettenflächen mit Mottenaugenstrukturen mit Facettenflächen ohne Strukturen oder mit anders gearteten Strukturen zu mischen bzw. zu kombinieren.

Beugungsstrukturen nullter Ordnung, wie sie beispielsweise in der US 4,484,797 und der WO 03/059643 A1 beschrieben sind. Diese Strukturen besitzen typischerweise Gitterperioden im Bereich von 200nm bis 500nm und Gittertiefen zwischen 50nm und 300nm. Das Gitterprofil kann rechteckig oder sinusförmig oder komplexer geformt sein. Diese Strukturen sind vorzugsweise mit einer HRI-Schicht oder einem Multischichtpaket aus HRI- und LRI-Schichten beschichtet. Die Schichtdicke der einzelnen HRI-Schichten liegt dabei typischerweise im Bereich von 30nm bis 300nm. Wenn die Beugungsstrukturen nullter Ordnung eine Vorzugsrichtung aufweisen, z.B. linear oder gekreuzt sind, weisen sie beim Drehen einen Farbverschiebungseffekt auf. Die Kombination dieser Art von Strukturen mit den Facettenflächen ermöglicht es beispielsweise, optische Effekte zu imitieren, wie sie mit Pigmenten mit Beugungsstrukturen nullter Ordnung erzeugt werden.

Die Anwendung unserer Erfindung ermöglicht es, den aufwendigen Umweg über die Herstellung, Aufbringung und gegebenenfalls Ausrichtung solcher Pigmente vermeiden zu können.

Darüber hinaus ist es möglich, einen "rolling bar" artigen Effekt mit dem Dreheffekt zu kombinieren. In einer bevorzugten Ausführungsform sind lineare Gitterlinien der Beugungsstrukturen nullter Ordnung senkrecht zur Achse einer "rolling bar" wie in Fig. 8a skizziert, d.h. in x-Richtung, ausgerichtet. Wird nun der Mehrschichtkörper um die y-Achse gekippt, zeigen die Beugungsstrukturen nullter Ordnung einen geringen Farbkippeffekt auf, wie es für die Betrachtung parallel zu den Gitterlinien bekannt ist. Dies hat zur Folge, dass der "rolling bar" Effekt dominiert. Bei Drehung des Mehrschichtkörpers um 90° dominiert dagegen der Farbdreheffekt der Beugungsstrukturen nullter Ordnung. Wird der Mehrschichtkörper dagegen um die x-Achse gekippt, zeigen die Beugungsstrukturen nullter Ordnung einen ausgeprägten Farbkippeffekt.

Nanotext, wie dies in den Figuren Fig.12 a und 12b gezeigt ist. Auch hier kann der Nanotext wie dies in Fig.12a anhand des Nanotexts 46 gezeigt ist, unabhängig von der Orientierung der Facettenflächen 50 angeordnet sein oder entsprechend des Azimuthwinkels der jeweiligen Facettenfläche 50, wie dies in Fig. 12b gezeigt ist. Unter Nanotext sind auch Nanomotive wie Logos, Umrisskarten, Symbole, Bilder, Kodierungen, Barcodes und ähnliches zu fassen.

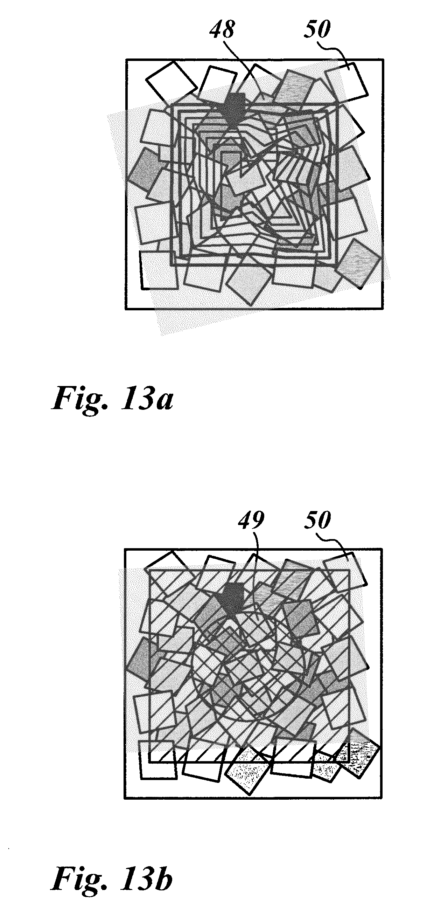

Solche Strukturen können auch lediglich in einem vorbestimmten Bereich die Facettenflächen 50 überlagern wie dies in Fig. 13a gezeigt ist. Die linienartigen mit einem Diffraktionsgitter belegten Strukturen 48 überlagern hierbei in einem Teilbereich die Facettenflächen 50. Bei allen Ausführungsformen der Erfindung ist es möglich, dass zwischen den Facettenflächen Strukturen, wie weiter oben beschrieben, vorhanden sind. Dabei können diese Strukturen nur zwischen den Facettenflächen vorhanden sein oder auf und zwischen den Facettenflächen.

Fig. 13b zeigt eine entsprechende Ausführungsform, bei der in einem Bereich die Facettenflächen 50 von einer Beugungsstruktur nullter Ordnung 49 überlagert sind, und so in dem entsprechenden Bereich der durch diese Strukturen generierte Farbwechsel, beispielsweise von rot nach grün bei einer 90° Drehung des Mehrschichtkörpers generiert wird.

## Patentansprüche

1. Mehrschichtkörper (10) mit einer ersten Schicht (23) mit einer ersten Oberfläche (231) und einer der ersten Oberfläche (231) gegenüberliegenden zweiten Oberfläche (232), wobei die erste Oberfläche (231) der ersten Schicht (23) eine durch Koordinatenachsen x und y aufgespannte Grundebene definiert, wobei in die zweite Oberfläche (232) der ersten Schicht (23) in einem ersten Bereich (31) eine Vielzahl von Facettenflächen (50) abgeformt ist, wobei jede der Facettenflächen (50) eine kleinste Abmessung (67) von mehr als 1µm und eine größte Abmessung (68) von weniger als 300µm aufweist, wobei jede der Facettenflächen (50) durch die Parameter Form F der Facettenfläche, Flächengröße S der Facettenfläche, Beabstandung H des Flächenschwerpunkts (66) der Facettenfläche von der Grundebene, Position P des Flächenschwerpunkts (66) der Facettenfläche in dem von der x-Achse und der y-Achse aufgespannten Koordinatensystem, Neigungswinkel Ax der Facettenfläche um die x-Achse gegen die Grundebene, Neigungswinkel Ay der Facettenfläche um die y-Achse gegen die Grundebene und Azimuthwinkel Az der Facettenfläche, definiert durch den Drehwinkel der Facettenfläche um eine auf der Grundebene senkrecht stehende z-Achse, bestimmt ist, wobei ein oder mehrere der Parameter F, S, H, P und Az der im ersten Bereich (31) angeordneten Facettenflächen (50) pseudo-zufällig innerhalb eines jeweils für den ersten Bereich (31) vordefinierten Variationsbereich variiert ist und wobei auf jede der Facettenflächen eine reflektierende zweite Schicht (24) aufgebracht ist, wobei der Mehrschichtkörper (10) eine optisch variable erste Information generiert und zur Generierung der ersten Information die Neigungswinkel Ax und Ay der Facettenflächen (50) im ersten Bereich (31) gemäß einer Funktion F(x,y) variiert sind.

2. Mehrschichtkörper (10) mit einer ersten Schicht (23) mit einer ersten Oberfläche (231) und einer der ersten Oberfläche (231) gegenüberliegenden zweiten Oberfläche (232), wobei die erste Oberfläche (231) der ersten Schicht (23) eine durch Koordinatenachsen x und y aufgespannte Grundebene definiert, wobei in die zweite Oberfläche (232) der ersten Schicht (23) in einem ersten Bereich (31) eine Vielzahl von Facettenflächen (50) abgeformt ist, wobei jede der Facettenflächen (50) eine kleinste Abmessung (67) von mehr als 1µm und eine größte Abmessung (68) von weniger als 300µm aufweist, wobei jede der Facettenflächen (50) durch die Parameter Form F der Facettenfläche, Flächengröße S der Facettenfläche, Beabstandung H des Flächenschwerpunkts (66) der Facettenfläche von der Grundebene, Position P des Flächenschwerpunkts (66) der Facettenfläche in dem von der x-Achse und der y-Achse aufgespannten Koordinatensystem, Neigungswinkel Ax der Facettenfläche um die x-Achse gegen die Grundebene, Neigungswinkel Ay der Facettenfläche um die y-Achse gegen die Grundebene und Azimuthwinkel Az der Facettenfläche, definiert durch den Drehwinkel der Facettenfläche um eine auf der Grundebene senkrecht stehende z-Achse, bestimmt ist, wobei ein oder mehrere der Parameter F, S, H, P, Ax, Ay und Az der im ersten Bereich (31) angeordneten Facettenflächen (50) pseudo-zufällig innerhalb eines jeweils für den ersten Bereich (31) vordefinierten Variationsbereich variiert ist und wobei auf jede der Facettenflächen eine reflektierende zweite Schicht (24) aufgebracht ist, wobei die Neigungswinkel Ax und Ay der Facettenflächen (50) im ersten Bereich (33) jeweils gemäß einer additiven Überlagerung der durch eine Funktion F(x,y) bestimmten Neigungswinkel Ax und Ay mit der pseudo-zufälligen Variation des Neigungswinkels Ax und/oder des Neigungswinkels Ay innerhalb des jeweiligen für den ersten Flächenbereich vordefinierten Variationsbereich bestimmt sind, wobei die Funktion F(x,y) so gewählt ist, dass sie die Neigungswinkel Ax und Ay zur Generierung einer optisch variablen ersten Information (75) variiert.

3. Mehrschichtkörper (10) nach Anspruch 2,
**dadurch gekennzeichnet,**
**dass** der vordefinierte Variationsbereich der Neigungswinkel Ax und/oder Ay geringer als die mittlere Steigung der Funktion F(x,y) im ersten Bereich (31) gewählt ist, insbesondere zwischen dem 0,1-fachen und dem 1,9-fachen der mittleren Steigung der Funktion F(x,y) gewählt.

4. Mehrschichtkörper (10) nach einem der vorgehenden Ansprüche,
**dadurch gekennzeichnet,**
**dass** die Funktion F(x,y) eine dreidimensionale Freiformfläche (74) mit einer oder mehreren Freiformelementen (70, 71, 72, 73) beschreibt und dass die durch die Funktion F(x,y) bestimmten Neigungswinkel Ax und/oder Ay durch die jeweilige Flächennormale der dreidimensionalen Freiformfläche im Flächenschwerpunkt der jeweiligen Facettenfläche (50) bestimmt sind.

5. Mehrschichtkörper (10) nach Anspruch 4,
**dadurch gekennzeichnet,**
**dass** die Funktion F(x,y) einen Ausschnitt einer Oberfläche eines dreidimensionalen Objekts als Freiformelement (74) beschreibt, wobei die kleinste Abmessung eines Freiformelements bezogen auf eine Projektion auf die Grundebene insbesondere mehr als 2mm, weiter bevorzugt mehr als 4mm beträgt und benachbarte Maxima des Freiformelements in Richtung der z Achse bezogen auf eine Projektion auf die Grundebene insbesondere mehr als 4mm, weiter bevorzugt mehr als 8mm voneinander beabstandet sind, und/oder dass die dreidimensionale Freiformfläche ein oder mehrere einen linsenartigen Vergrößerungs-, Verkleinerungs- oder Verzerrungseffekt erzeugenden Freiformelemente in Form eines alphanumerischen Zeichens, einer geometrischen Figur oder eines sonstigen Objekts umfasst, und/oder, dass jedes der Freiformelemente eine kleinste Flächenausdehnung in der Grundebene von mehr als 2mm aufweist, insbesondere zwischen 2mm und 50mm aufweist und/oder dass die Maxima der Freiformfläche in Bezug auf ihre jeweilige Projektion auf die Grundlage mehr als 4mm, bevorzugt mehr als 8mm voneinander entfernt sind, und/oderdass die Funktion F(x,y) im Bereich jedes Freiformelements stetig und differenzierbar ist und/oder dass die Funktion F(x,y) im Bereich jedes Freiformelements sich aus geraden und gekrümmten Flächenbereichen zusammensetzt, und/oderdass die Funktion F(x,y) im Bereich eines Freiformelements eine Freiformfläche in Form einer Linse oder zur Darstellung eines alphanumerischen Zeichens, einer geometrischen Figur oder eines sonstigen Objekts transformierten Linse beschreibt.

6. Mehrschichtkörper (10) nach einem der vorgehenden Ansprüche,
**dadurch gekennzeichnet,**
**dass** für die pseudo-zufällige Variation eines oder mehrerer der Parameter F, H, P, Ax, Ay und Az innerhalb des jeweils vordefinierten Variationsbereichs pseudo-zufällig ein Parametervariationswert aus einer vordefinierten Gruppe von Parametervariationswerten ausgewählt wird, wobei die Gruppe zwischen 3 und 30, insbesondere zwischen 3 und 10 Parametervariationswerte umfasst.

7. Mehrschichtkörper (10) nach einem der vorgehenden Ansprüche,
**dadurch gekennzeichnet,**
**dass** der Neigungswinkel Ax und/oder Ay der Facettenflächen (50) in dem ersten Bereich (31) pseudo-zufällig in einem Variationsbereich von - 45° bis +45°, weiter bevorzugt in einem Bereich von -30° bis +30°, insbesondere zur Erzielung eines Glitzereffekts variiert ist, und/oder dass der Azimuthwinkel Az der Facettenflächen (50) in dem ersten Bereich (31) pseudo-zufällig in einem Variationsbereich von -90° bis +90°, weiter bevorzugt von -45° bis +45°, variiert ist, und/oder dass die Beabstandung H des Flächenschwerpunkts der Facettenflächen in dem ersten Bereich pseudo-zufällig variiert ist, wobei der durch die Differenz zwischen der maximalen Beabstandung und der minimalen Beabstandung, zwischen denen die Beabstandung H der Facettenflächen (50) im ersten Bereich (31) zufällig variiert ist, zwischen 0,5µm und 8µm, weiter bevorzugt zwischen 0,5µm und 2µm beträgt.

8. Mehrschichtkörper (10) nach einem der vorgehenden Ansprüche,
**dadurch gekennzeichnet,**
**dass** die Facettenflächen (50) gemäß eines zweidimensionalen, von der x und der y-Achse aufgespannten Raster angeordnet sind.

9. Mehrschichtkörper (10) nach Anspruch 8,
**dadurch gekennzeichnet,**
**dass** die Grenzwerte des Variationsbereich der pseudo-zufälligen Verschiebung aus der jeweiliger Regelposition in x-Richtung und/oder y-Richtung zwischen 0% und 100%, bevorzugt zwischen 0% und 20% der Abmessung der Facettenfläche in Richtung der x-Achse bzw. der y-Achse betragen, und/oder
**dass** der Variationsbereich der zufälligen Verschiebung +D/2 und -D/2 beträgt, wobei D die Abmessung der Facettenfläche in Richtung der x-Achse bzw. der y-Achse ist, und/oder dass die Rasterweite des Rasters in Richtung der x-Achse und/oder der y-Achse zwischen dem 1,2-fachen und dem 2-fachen der Abmessung der Facettenfläche in Richtung der x-Achse bzw. y-Achse beträgt, insbesondere das 1,5-fache der Abmessung der Facettenfläche (50) in Richtung der x-Achse bzw. y-Achse beträgt.

10. Mehrschichtkörper (10) nach einem der vorgehenden Ansprüche,
**dadurch gekennzeichnet,**
**dass** eine oder mehrere der Facettenflächen (50) mit einer diffraktiven Struktur (44), einer Beugungsstruktur nullter Ordnung (45) oder einem Nanotext (46, 47) belegt sind, und/oder
**dass** die zweite Schicht (24) ein Dünnfilmschichtsystem aufweist, welches eine oder mehrere Distanzschichten (242) aufinreist, deren Schichtdicke so gewählt ist, dass das Dünnfilmschichtsystem mittels Interferenz des einfallenden Lichts einen betrachtungswinkelabhängigen Farbverschiebungseffekt insbesondere im sichtbaren Wellenlängenbereich generiert, und/oder
**dass** die zweite Schicht eine orientierte Flüssigkristallschicht umfasst, und/oder dass die zweite Schicht eine Metallschicht (243) und/oder eine HRI-Schicht umfasst.

11. Mehrschichtkörper (10) nach einem der vorgehenden Ansprüche,
**dadurch gekennzeichnet,**
**dass** der Mehrschichtkörper (10) einen zweiten Bereich (32) aufweist, wobei ein oder mehrere der Parameter F, S, H, P, Ax, Ay und Az jeder der im zweiten Bereich (32) angeordneten Facettenflächen (50) pseudozufällig im zweiten Bereich (32) innerhalb eines jeweils für den zweiten Bereich (32) vordefinierten Variationsbereich variiert sind, und dass sich die Parameter, die pseudo-zufällig im ersten und im zweiten Bereich (31, 32) variiert sind, sich unterscheiden und/oder mindestens ein Variationsbereich der variierten Parameter im ersten und im zweiten Bereich (31, 32) unterschiedlich gewählt ist, insbesondere dass der mindestens eine Variationsbereich im ersten Bereich (31) sich von dem im zweiten Bereich (32) um mindestens 20% unterscheidet.

12. Mehrschichtkörper (10) nach einem der vorhergehenden Ansprüche,
**dadurch gekennzeichnet,**
**dass** in einem Teilbereich (312) des ersten Bereichs (31), der nicht von den Facettenflächen (50) belegt ist, eine Hintergrundstruktur (44) in die zweiten Oberfläche (232) der ersten Schicht (23) geformt ist, wobei die Hintergrundstruktur (44) insbesondere eine diffraktive und/oder refraktive Reliefstruktur, insbesondere ein Kinegram^{®} umfasst.

13. Mehrschichtkörper (10) nach Anspruch 12,
**dadurch gekennzeichnet,**
**dass** der Flächenanteil der mit den Facettenflächen (50) belegten Flächenbereiche (311) des Mehrschichtkörpers an der Gesamtfläche der mit den Facettenflächen (50) belegten Teilflächen (311) des ersten Bereiches und der mit der Hintergrundstruktur (44) belegten Flächenbereichen (312) des ersten Bereiches weniger als 70%, bevorzugt weniger als 50%, weiter bevorzugt weniger als 30% beträgt, bei Betrachtung des Mehrschichtkörpers senkrecht zur Grundebene, und/oder
**dass** die Flächenschwerpunkte benachbarter Facettenflächen (50) zwischen 2µm und 300µm, weiter bevorzugt zwischen 5µm und 100µm beabstandet ist, und/oder dass der minimale Abstand zwischen einem Punkt auf der Außenkante jeder der Facettenflächen zu einem Punkt auf der Außenkante der jeweils benachbarten der Facettenflächen weniger als 300µm, weiter bevorzugt weniger als 100µm und weiter bevorzugt zwischen 0µm und 100µm, weiter bevorzugt zwischen 1µm und 50µm beträgt.

14. Mehrschichtkörper (10) nach einem der vorhergehenden Ansprüche,
**dadurch gekennzeichnet,**
**dass** die reflektierende zweite Schicht (24) im ersten Bereich (31) jeweils im Bereich der Facettenflächen (50) vorgesehen ist und in einem nicht mit den Facettenflächen (50) belegten ersten Teilbereich (312) nicht vorgesehen ist, wobei die reflektierende zweite Schicht (24) insbesondere im ersten Bereich (31) in einem nicht mit den Facettenflächen (50) belegten zweiten Teilbereich (313) vorgesehen ist, und wobei der erste und/oder zweite Teilbereich (312, 313) insbesondere musterförmig ausgeformt ist und insbesondere der erste Teilbereich einen Musterbereich (312) und der zweite Teilbereich (313) einen Hintergrundbereich zum ersten Teilbereich (312) bildet oder umgekehrt, und dass der Mehrschichtkörper in Durchlichtbetrachtung eine durch die Ausformung des ersten und zweiten Teilbereichs bestimmte, für den menschlichen Betrachter sichtbare Information bereitstellt, und wobei der erste Teilbereich insbesondere einen Hintergrundbereich zu den mit den Facettenflächen belegten Teilbereichen des ersten Bereichs bildet und vorzugsweise eine Vielzahl der Facettenflächen umschließt.

15. Verfahren zur Herstellung eines Mehrschichtkörpers (10) nach Anspruch 2 umfassend die Schritte:
Bereitstellen einer ersten Schicht (23) mit einer ersten Oberfläche (231) und einer der ersten Oberfläche (231) gegenüberliegenden zweiten Oberfläche (232), wobei die erste Oberfläche (231) der ersten Schicht (23) eine durch Koordinatenachsen x und y aufgespannte Grundebene definiert,
Abformen einer Vielzahl von Facettenflächen (50) in die zweite Oberfläche (232) der ersten Schicht (23), insbesondere mittels eines Prägewerkzeugs, wobei jede der Facettenflächen (50) eine kleinste Abmessung (67) von mehr als 3µm und eine größte Abmessung (68) von weniger als 300µm aufweist und wobei jeder der Facettenflächen (50) durch die Parameter Form F der Facettenfläche, Flächengröße S der Facettenfläche, Beabstandung H des Flächenschwerpunkts (66) der Facettenfläche von der Grundebene, Position P des Flächenschwerpunkts (66) der Facettenfläche in dem von der x-Achse und der y-Achse aufgespannten Koordinatensystem, Neigungswinkel Ax der Facettenfläche um die x-Achse gegen die Grundebene,
Neigungswinkel Ay der Facettenfläche um die y-Achse gegen die Grundebene und Azimutwinkel Az der Facettenfläche, definiert durch den Drehwinkel der Facettenfläche um eine auf der Grundebene senkrecht stehende z-Achse, bestimmt ist, und wobei einer oder mehrere der Parameter F, S, H, P, Ax, Ay und Az der in einem ersten Bereich angeordneten Facettenflächen (50) im ersten Bereich (31) pseudozufällig innerhalb eines jeweils für den ersten Bereich (31) vordefinierten Variationsbereich variiert sind, und Aufbringen einer reflektierende zweite Schicht (24) auf die Vielzahl der Facettenflächen, Bestimmung der Neigungswinkel Ax und Ay der Facettenflächen (50) im ersten Bereich (33) durch eine additive Überlagerung der durch eine Funktion F(x,y) bestimmten Neigungswinkel Ax und Ay mit der pseudo-zufälligen Variation des Neigungswinkels Ax und/oder des Neigungswinkels Ay innerhalb des jeweiligen für den ersten Bereich (31) vordefinierten Variationsbereich, wobei die Funktion F(x,y) so gewählt ist, dass sie die Neigungswinkel Ax und Ay zur Generierung einer optisch variablen ersten Information (75) variiert.

16. Verfahren zur Herstellung eines Mehrschichtkörpers (10) nach Anspruch 1 umfassend die Schritte:
Bereitstellen einer ersten Schicht (23) mit einer ersten Oberfläche (231) und einer der ersten Oberfläche (231) gegenüberliegenden zweiten Oberfläche (232), wobei die erste Oberfläche (231) der ersten Schicht (23) eine durch Koordinatenachsen x und y aufgespannte Grundebene definiert,
Abformen einer Vielzahl von Facettenflächen (50) in die zweite Oberfläche (232) der ersten Schicht (23), insbesondere mittels eines Prägewerkzeugs, wobei jede der Facettenflächen (50) eine kleinste Abmessung (67) von mehr als 3µm und eine größte Abmessung (68) von weniger als 300µm aufweist und wobei jeder der Facettenflächen (50) durch die Parameter Form F der Facettenfläche, Flächengröße S der Facettenfläche, Beabstandung H des Flächenschwerpunkts (66) der Facettenfläche von der Grundebene, Position P des Flächenschwerpunkts (66) der Facettenfläche in dem von der x-Achse und der y-Achse aufgespannten Koordinatensystem, Neigungswinkel Ax der Facettenfläche um die x-Achse gegen die Grundebene,
Neigungswinkel Ay der Facettenfläche um die y-Achse gegen die Grundebene und Azimutwinkel Az der Facettenfläche, definiert durch den Drehwinkel der Facettenfläche um eine auf der Grundebene senkrecht stehende z-Achse, bestimmt ist, und wobei einer oder mehrere der Parameter F, S, H, P und Az der in einem ersten Bereich angeordneten Facettenflächen (50) im ersten Bereich (31) pseudo-zufällig innerhalb eines jeweils für den ersten Bereich (31) vordefinierten Variationsbereich variiert sind, und Aufbringen einer reflektierende zweite Schicht (24) auf die Vielzahl der Facettenflächen, wobei der Mehrschichtkörper (10) eine optisch variable erste Information generiert und zur Generierung der ersten Information die Neigungswinkel Ax und Ay der Facettenflächen (50) im ersten Bereich (31) gemäß einer Funktion F(x,y) variiert sind.

17. Verfahren nach einem der Ansprüche 15 oder 16,
**dadurch gekennzeichnet,**
**dass** das Verfahren den Schritt umfasst:
Bestimmung der Position P jeder der Facettenflächen (50) im ersten Bereich (31) durch eine pseudo-zufällige Verschiebung des Flächenschwerpunkts (66) der jeweiligen Facettenfläche (50) aus dessen jeweiliger Regelposition (65) in x und/oder y Richtung, wobei ein zweidimensionales, von der x-Achse und der y-Achse aufgespanntes Raster für jede der im ersten Bereich (31) angeordneten Facettenflächen (50) die, Regelposition (65) des Flächenschwerpunkts (66) der jeweiligen Facettenfläche (50) in der Grundebene definiert.

## Claims

1. Multilayer body (10) having a first layer (23) having a first surface (231) and a second surface (232) opposing the first surface (231), wherein the first surface (231) of the first layer (23) defines a base plane which is spanned by coordinate axes x and y, wherein a plurality of facet surfaces (50) is moulded into the second surface (232) of the first layer (23) in a first region (31), wherein each of the facet surfaces (50) has a smallest dimension (67) of more than 1µm and a largest dimension (68) of less than 300µm, wherein each of the facet surfaces (50) is determined by the parameter form F of the facet surface, surface size S of the facet surface, spacing H of the surface centroid (66) of the facet surface from the base plane, position P of the surface centroid (66) of the facet surface in the coordinate system which is spanned by the x-axis and the y-axis, angle of inclination Ax of the facet surface around the x-axis with respect to the base plane, angle of inclination Ay of the facet surface around the y-axis with respect to the base plane and azimuth angle Az of the facet surface, defined by the rotational angle of the facet surface around a z-axis which stands perpendicularly on the base plane, wherein one or more of the parameters F, S, H, P and Az of the facet surfaces (50) arranged in the first region (31) is varied pseudo-randomly within a variation range which is predefined respectively for the first region (31) and wherein a reflective second layer (24) is applied to each of the facet surfaces, wherein the multilayer body (10) generates an optically variable first piece of information and the angles of inclination Ax and Ay of the facet surfaces (50) are varied in the first region (31) according to a function F(x,y) to generate the first piece of information.

2. Multilayer body (10) having a first layer (23) having a first surface (231) and a second surface (232) opposing the first surface (231), wherein the first surface (231) of the first layer (23) defines a base plane which is spanned by coordinate axes x and y, wherein a plurality of facet surfaces (50) is moulded into the second surface (232) of the first layer (23) in a first region (31), wherein each of the facet surfaces (50) has a smallest dimension (67) of more than 1µm and a largest dimension (68) of less than 300µm, wherein each of the facet surfaces (50) is determined by the parameter form F of the facet surface, surface size S of the facet surface, spacing H of the surface centroid (66) of the facet surface from the base plane, position P of the surface centroid (66) of the facet surface in the coordinate system which is spanned by the x-axis and the y-axis, angle of inclination Ax of the facet surface around the x-axis with respect to the base plane, angle of inclination Ay of the facet surface around the y-axis with respect to the base plane and azimuth angle Az of the facet surface, defined by the rotational angle of the facet surface around a z-axis which stands perpendicularly on the base plane, wherein one or more of the parameters F, S, H, P, Ax, Ay and Az of the facet surfaces (50) arranged in the first region (31) is varied pseudo-randomly within a variation range which is predefined respectively for the first region (31) and wherein a reflective second layer (24) is applied to each of the facet surfaces, wherein the angles of inclination Ax and Ay of the facet surfaces (50) in the first region (33) are each determined according to an additive superposition of the angles of inclination Ax and Ay determined by a function F(x,y) having the pseudo-random variation of the angle of inclination Ax and/or the angle of inclination Ay within the respective variation range which is predefined for the first surface region, wherein the function F(x,y) is selected in such a way that it varies the angles of inclination Ax and Ay to generate an optically variable first piece of information (75).

3. Multilayer body (10) according to claim 2,
**characterised in that**
the predefined variation range of the angles of inclination Ax and/or Ay is selected to be smaller than the average increase of the function F(x,y) in the first region (31), in particular is selected between 0.1-times and 1.9-times the average increase of the function F(x,y).

4. Multilayer body (10) according to one of the preceding claims,
**characterised in that**
the function F(x,y) describes a three-dimensional freeform surface (74) having one or more freeform elements (70, 71, 72, 73) and that the angles of inclination Ax and/or Ay determined by the function F(x,y) are determined by the respective surface normal of the three-dimensional freeform surface in the surface centroid of the respective facet surface (50).

5. Multilayer body (10) according to claim 4,
**characterised in that**
the function F(x,y) describes a section of a surface of a three-dimensional object as a freeform element (74), wherein the smallest dimension of a freeform element with regard to a projection onto the base plane amounts, in particular, to more than 2mm, more preferably more than 4mm, and adjacent maxima of the freeform element in the direction of the z axis with regard to a projection onto the base plane are spaced from one another in particular by more than 4mm, more preferably more than 8mm, and/or that the three-dimensional freeform surface comprises one or more freeform elements which generate a lenticular enlargement, reduction or distortion effect, in the form of an alphanumerical character, a geometric figure or another object, and/or that each of the freeform elements has a smallest surface expansion in the base plane of more than 2mm, in particular between 2mm and 50mm, and/or that the maxima of the freeform surface with regard to their respective projection onto the base plane are at a distance from one another of more than 4mm, preferably more than 8mm, and/or that the function F(x,y) is constant and able to be differentiated in the region of each freeform element and/or that the function F(x,y) is composed of straight and curved surface regions in the region of each freeform element, and/or that the function F(x,y) describes a freeform surface in the form of a lens or a lens which is transformed to depict an alphanumericalcharacter, a geometric figure or another object in the region of a freeform element.

6. Multilayer body (10) according to one of the preceding claims,
**characterised in that**
for the pseudo-random variation of one or more of the parameters F, H, P, Ax, Ay and Az within each predefined variation range, a parameter variation value is selected pseudo-randomly from a predefined group of parameter variation values, wherein the group comprises parameter variation values between 3 and 30, in particular between 3 and 10.

7. Multilayer body (10) according to one of the preceding claims,
**characterised in that**,
the angle of inclination Ax and/or Ay of the facet surfaces (50) in the first region (31) is varied pseudo-randomly in a variation range from -45-' to +45-', more preferably in a range from -30-' to +30-', in particular to achieve a glitter effect, and/or that the azimuth angle Az of the facet surfaces (50) in the first region is varied pseudo-randomly in avariation range from -90-' to +90-', more preferably from -45-' to +45-', and/or that the spacing H of the surface centroid of the facet surfaces in the first region is varied pseudo-randomly, wherein the difference between the maximum spacing and the minimum spacing, between which the spacing H of the facet surfaces (50) in the first region (31) is varied randomly, amounts to between 0.5µm and 8µm, more preferably between 0.5µm and 2µm.

8. Multilayer body (10) according to one of the preceding claims,
**characterised in that**
the facet surfaces (50) are arranged according to a two-dimensional grid which is spanned by the x and y-axis.

9. Multilayer body (10) according to claim 8,
**characterised in that**,
the limit values of the variation range of the pseudo-random displacement from the respective regulating position in the x-direction and/or y-direction amount to between 0% and 100%, preferably between 0% and 20% of the dimension of the facet surface in the direction of the x-axis or the y-axis, and/or
that the variation range of the random displacement amounts to +D/2 and-D/2, wherein D is the dimension of the facet surface in the direction of the x-axis or the y-axis, and/or that the grid width of the grid in the direction of the x-axis and/or of the y-axis amounts to between 1.2-times and 2-times the dimension of the facet surface in the direction of the x-axis or y-axis, in particular amounts to 1.5-times the dimension of the facet surface (50) in the direction of the x-axis or y-axis.

10. Multilayer body (10) according to one of the preceding claims,
**characterised in that**
one or more of the facet surfaces (50) are coated with a diffractive structure (44), a diffractive structure of zero order (45) or a nanotext (46, 47), and/or
that the second layer (24) has a thin-film layer system which has one or more spacer layers (242), the layer thickness of which is selected in such a waythat the thin-film layer system generates a colour displacement effect depending on the angle of observation, in particular in the visible wavelength range, by means of interference of the incident light, and/or
that the second layer comprises an orientated liquid crystal layer, and/or that the second layer comprises a metallic layer (243) and/or an HRI layer.

11. Multilayer body (10) according to one of the preceding claims,
**characterised in that**,
the multilayer body (10) has a second region (32), wherein one or more of the parameters F, S, H, P, Ax, Ay and Az of each of the facet surfaces (50) arranged in the second region (32) are varied pseudo-randomly in the second region (32) within a variation range which is predefined respectively for the second region (32), and that the parameters which are varied pseudo-randomly in the first and in the second region (31, 32) differ from one another and/or at least one variation range of the varied parameters is selected to be different in the first and in the second region (31, 32), in particular that the at least one variation range differs in the first region (31) from in the second region (32) by at least 20%.

12. Multilayer body (10) according to one of the preceding claims,
**characterised in that**
a background structure (44) is moulded into the second surface (232) of the first layer (23) in a partial region (312) of the first region (31) which is not covered by the facet surfaces (50), wherein the background structure (44) in particular comprises a diffractive and/or refractive relief structure, in particular a Kinegram®.

13. Multilayer body (10) according to claim 12,
**characterised in that**
the surface proportion of the surface regions (311) of the multilayer body which are covered with the facet surfaces (50) to the total surface of the partial surfaces (311) of the first region which are covered with the facet surfaces (50) and the surface regions (312) of the first region which are covered with the background structure (44) amounts to less than 70%, preferably less than 50%, more preferably less than 30%, during observation of the multilayer body perpendicularly to the base plane, and/or that the surface centroids of adjacent facet surfaces (50) are spaced from one another by between 2µm and 300µm, more preferably by between 5µm and 100µm, and/or that the minimum distance between one point on the outer edge of each of the facet surfaces to a point on the outer edge of each adjacent facet surface amounts to less than 300µm, more preferably less than 100µm and even more preferably between 0µm and 100µm, more preferably between 1µm and 50µm.

14. Multilayer body (10) according to one of the preceding claims,
**characterised in that**
the reflective second layer (24) is provided in the first region (31) in the region of each facet surface (50) and is not provided in a first partial region (312) which is not covered with the facet surfaces (50), wherein the reflective second layer (24) is provided in particular in the first region (31) in a second partial region (313) which is not covered with the facet surfaces (50), and wherein the first and/or second partial region (312, 313) is formed in particular to be patterned and, in particular, the first partial region forms a patterned region (312) and the second partial region (313) forms a background region relative to the first partial region (312) or vice versa, and that the multilayer body provides a piece of information which is determined by the formation of the first and second partial regions and is visible for the human observer, and wherein the first partial region in particular forms a background region relativeto the partial regions of the first region which are covered with the facet surfaces and preferably encloses a plurality of the facet surfaces.

15. Method for the production of a multilayer body (10) according to claim 2, comprising the steps:
providing a first layer (23) having a first surface (231) and a second surface (232) opposing the first surface (231), wherein the first surface (231) of the first layer (23) defines a base plane which is spanned by coordinate axes x and y,
moulding a plurality of facet surfaces (50) into the second surface (232) of the first layer (23), in particular by means of an embossing tool, wherein each of the facet surfaces (50) has a smallest dimension (67) of more than 3µm and a largest dimension (68) of less than 300µm and wherein each of the facet surfaces (50) is defined by the parameter form F of the facet surface, surface size S of the facet surface, spacing H of the surface centroid (66) of the facet surface from the base plane, position P of the surface centroid (66) of the facet surface in the coordinate system which is spanned by the x-axis and the y-axis, angle of inclination Ax of the facet surface around the x-axis with respect to the base plane, angle of inclination Ay of the facet surface around the y-axis with respect to the base plane and azimuth angle Az of the facet surface, defined by the rotational angle of the facet surface around a z-axis which stands perpendicularly on the base plane, and wherein one or more of the parameters F, S, H, P, Ax, Ay and Az of the facet surfaces (50) arranged in a first region are varied pseudo-randomly in a first region (31) within a variation range which is predefined respectively for the first region (31), and applying a reflective second layer (24) to the plurality of facet surfaces, determining the angles of inclination Ax and Ay of the facet surfaces (50) in the first region (33) by an additive superposition of the angles of inclination Ax and Ay determined by a function F(x,y) with the pseudo-random variation of the angle of inclination Ax and/or of the angle of inclination Ay within the respective variation range which is predefined for the first region (31), wherein the function F(x,y) is selected in such a way that it varies the angles of inclination Ax and Ay to generate an optically variable first piece of information (75).

16. Method for the production of a multilayer body (10) according to claim 1, comprising the steps:
providing a first layer (23) having a first surface (231) and a second surface (232) opposing the first surface (231), wherein the first surface (231) of the first layer (23) defines a base plane which is spanned by coordinate axes x and y,
moulding a plurality of facet surfaces (50) into the second surface (232) of the first layer (23), in particular by means of an embossing tool, wherein each of the facet surfaces (50) has a smallest dimension (67) of more than 3µm and a largest dimension (68) of less than 300µm and wherein each of the facet surfaces (50) is defined by the parameter form F of the facet surface, surface size S of the facet surface, spacing H of the surface centroid (66) of the facet surface from the base plane, position P of the surface centroid (66) of the facet surface in the coordinate system which is spanned by the x-axis and the y-axis, angle of inclination Ax of the facet surface around the x-axis with respect to the base plane, angle of inclination Ay of the facet surface around the y-axis with respect to the base plane and azimuth angle Az of the facet surface, defined by the rotational angle of the facet surface around a z-axis which stands perpendicularlyon the base plane, and wherein one or more of the parameters F, S, H, P, and Az of the facet surfaces (50) arranged in a first region are varied pseudo-randomly within a variation range which is predefined respectively for the first region (31), and applying a reflective second layer (24) to the plurality of facet surfaces, wherein the multilayer body (10) generates an optically variable first piece of information and the angles of inclination Ax and Ay of the facet surfaces (50) are varied in the first region (31) according to a function F(x,y) to generate the first piece of information.

17. Method according to one of claims 15 or 16,
**characterised in that**
the method comprises the step:
determining the position P of each of the facet surfaces (50) in the first region (31) by a pseudo-random displacement of the surface centroid (66) of the respective facet surface (50) from the respective regulating position (65) thereof in the x and/or y direction, wherein a two-dimensional grid which is spanned by the x-axis and the y-axis defines the regulating positon (65) of the surface centroid (66) of the respective facet surface (50) in the base plane for each of the facet surfaces arranged in the first region (31).

## Revendications

1. Corps multicouche (10) comportant une première couche (23) avec une première surface (231) et une deuxième surface (232) opposée à la première surface (231), dans lequel la première surface (231) de la première couche (23) définit un plan de base formé par des axes de coordonnées x et y, dans lequel dans la deuxième surface (232) de la première couche (23) dans une première zone (31), une multiplicité de surfaces de facette (50) est façonnée, dans lequel chacune des surfaces de facette (50) présente une dimension la plus petite (67) supérieure à 1 µm et une dimension la plus grande (68) inférieure à 300 µm, dans lequel chacune des surfaces de facette (50) est déterminée par les paramètres de forme F de la surface de facette, de grandeur de surface S de la surface de facette, de distance H du centre de gravité de surface (66) de la surface de facette du plan de base, de position P du centre de gravité de la surface (66) de la surface de facette dans le système de coordonnées formé par l'axe x et l'axe y, d'angle d'inclinaison Ax de la surface de facette autour de l'axe x par rapport au plan de base, d'angle d'inclinaison Ay de la surface de facette autour de l'axe y par rapport au plan de base et un angle azimutal Az de la surface de facette défini par l'angle de rotation de la surface de facette autour d'un axe z perpendiculaire au plan de base, dans lequel un ou plusieurs des paramètres F, S, H, P et Az des surfaces de facette (50) disposées dans la première zone (31) varie (nt) de façon pseudo-aléatoire dans une zone de variation prédéfinie respectivement pour la première zone (31) et dans lequel sur chacune des surfaces de facette, une deuxième couche réfléchissante (24) est appliquée, dans lequel le corps multicouche (10) génère une première information optiquement variable et pour la génération de la première information, les angles d'inclinaison Ax et Ay des surfaces de facette (50) dans la première zone (31) varient selon une fonction f(x,y).

2. Corps multicouche (10) comportant une première couche (23) avec une première surface (231) et une deuxième surface (232) opposée à la première surface (231), dans lequel la première surface (231) de la première couche (23) définit un plan de base formé par des axes de coordonnées x et y, dans lequel dans la deuxième surface (232) de la première couche (23) dans une première zone (31), une multiplicité de surfaces de facette (50) est façonnée, dans lequel chacune des surfaces de facette (50) présente une dimension la plus petite (67) supérieure à 1 µm et une dimension la plus grande (68) inférieure à 300 µm, dans lequel chacune des surfaces de facette (50) est déterminée par les paramètres de forme F de la surface de facette, de grandeur de surface S de la surface de facette, de distance H du centre de gravité de surface (66) de la surface de facette du plan de base, de position P du centre de gravité de la surface (66) de la surface de facette dans le système de coordonnées formé par l'axe x et l'axe y, d'angle d'inclinaison Ax de la surface de facette autour de l'axe x par rapport au plan de base, d'angle d'inclinaison Ay de la surface de facette autour de l'axe y par rapport au plan de base et un angle azimutal Az de la surface de facette défini par l'angle de rotation de la surface de facette autour d'un axe z perpendiculaire au plan de base, dans lequel un ou plusieurs des paramètres F, S, H, P, Ax, Ay et Az des surfaces de facette (50) disposées dans la première zone (31) varie (nt) de façon pseudo-aléatoire dans une zone de variation prédéfinie respectivement pour la première zone (31) et dans lequel sur chacune des surfaces de facettes, une deuxième couche réfléchissante (24) est appliquée, dans lequel les angles d'inclinaison Ax et Ay des surfaces de facette (50) dans la première zone (33) varient respectivement selon une superposition additive de l'angle d'inclinaison Ax et Ay déterminé par une fonction f(x,y) avec la variation pseudo-aléatoire de l'angle d'inclinaison Ax et/ou de l'angle d'inclinaison Ay dans la zone de variation prédéfinie respectivement pour la première zone de surface, dans lequel la fonction F(x,y) est choisie de telle sorte qu'elle fasse varier les angles d'inclinaison Ax et Ay pour générer une première information (75) optiquement variable.

3. Corps multicouche (10) selon la revendication 2,
**caractérisé en ce que**
la zone de variation prédéfinie des angles d'inclinaison Ax et/ou Ay est choisie de façon à être inférieure à la pente moyenne de la fonction F(x,y) dans la première zone, en particulier est choisie entre les facteurs 0,1 et 1,9 de la pente moyenne de la fonction F(x,y).

4. Corps multicouche (10) selon l'une des revendications précédentes,
**caractérisé en ce que**
la fonction F(x,y) décrit une surface de forme libre tridimensionnelle (74) comportant un ou plusieurs éléments de forme libre (70, 71, 72, 73) et **en ce que** les angles d'inclinaison Ax et/ou Ay déterminés par la fonction F(x,y) sont déterminés par les normales de surface respectives de la surface de forme libre tridimensionnelle dans le centre de gravité de surface de la surface de facette (50) respective.

5. Corps multicouche (10) selon la revendication 4,
**caractérisé en ce que**
la fonction F(x,y) décrit un segment d'une surface d'un objet tridimensionnel sous la forme d'un élément de forme libre (74), dans lequel la dimension la plus petite d'un élément de forme libre par rapport à une projection sur le plan de base est en particulier supérieure à 2 mm, de manière davantage préférée, supérieure à 4 mm, et des maxima voisins de l'élément de forme libre en direction de l'axe z par rapport à une projection sur le plan de base sont distants en particulier de plus de 4 mm, de manière davantage préférée, de plus de 8 mm, et/ou **en ce que** la surface de forme libre tridimensionnelle comprend un ou plusieurs éléments de forme libre générant un effet d'agrandissement, de réduction ou de distorsion sous la forme d'un signe alphanumérique, d'une figure géométrique ou d'un autre objet et/ou **en ce que** chacun des éléments de forme libre présente une extension de surface la plus petite dans le plan de base de plus de 2 mm, en particulier entre 2 mm et 50 mm et/ou **en ce que** les maxima de la surface de forme libre par rapport à leur projection respective sur la base sont distants de plus de 4 mm, de préférence, de plus de 8 mm et/ou en ce que la fonction F(x,y) est constante et peut être différenciée dans la zone de chaque élément de forme libre et/ou **en ce que** la fonction F(x,y) dans la zone de chaque élément de forme libre est constituée de zones de surface droites et courbes et/ou **en ce que** la fonction F(x,y) dans la zone d'un élément de forme libre décrit une surface de forme libre sous la forme d'une lentille ou d'une lentille transformée pour la représentation d'un signe alphanumérique, d'une figure géométrique ou d'un autre objet.

6. Corps multicouche (10) selon l'une des revendications précédentes,
**caractérisé en ce que**
pour la variation pseudo-aléatoire d'un ou plusieurs des paramètres F, H, P, Ax, Ay et Az dans la zone de variation prédéfinie respectivement de façon pseudo-aléatoire, une valeur de variation de paramètres est choisie dans un groupe prédéfini de valeurs de variation de paramètres, dans lequel le groupe comprend entre 3 et 30, en particulier entre 3 et 10 valeurs de variation de paramètres.

7. Corps multicouche (10) selon l'une des revendications précédentes,
**caractérisé en ce que**
l'angle d'inclinaison Ax et/ou Ay des surfaces de facette (50) dans la première zone (31) varie de façon pseudo-aléatoire dans une zone de variation de -45° à +45°, de manière davantage préférée, dans une zone de -30° à +30°, en particulier pour obtenir un effet scintillant, et/ou **en ce que** l'angle azimutal Az de la surface de facette (50) dans la première zone (31) varie de façon pseudo-aléatoire dans une zone de variation de -90° à +90°, de manière davantage préférée, de -45° à +45° et/ou **en ce que** la distance H du centre de gravité de surface des surfaces de facette varie dans la première zone de façon pseudo-aléatoire, dans lequel, par la différence entre la distance maximale et la distance minimale entre lesquelles la distance H des surfaces de facette (50) dans la première zone (31) varie de façon aléatoire, et de préférence se situe entre 0,5 µm et 8 µm, de manière davantage préférée entre 0,5 µm et 2 µm.

8. Corps multicouche (10) selon l'une des revendications précédentes,
**caractérisé en ce que**
les surfaces de facette (50) sont disposées selon une grille bidimensionnelle formée des axes x et y.

9. Corps multicouche (10) selon la revendication 8,
**caractérisé en ce que**
les valeurs seuils de la zone de variation du décalage pseudo-aléatoire de la position normale respective en direction x et/ou en direction y sont entre 0 % et 100 %, de préférence entre 0 % et 20 % de la dimension de la surface de facette en direction de l'axe x ou de l'axe y et/ou
**en ce que** la zone de variation du décalage aléatoire est de +D/2 et -D/2, dans lequel D est la dimension de la surface de facette en direction de l'axe x ou de l'axe y et/ou **en ce que** la largeur de grille de la grille dans la direction de l'axe x et/ou de l'axe y est entre le facteur 1,2 et le facteur 2 de la dimension de la surface de facette en direction de l'axe x ou de l'axe y, en particulier le facteur 1,5 de la dimension de la surface de facette (50) dans la direction de l'axe x ou de l'axe y.

10. Corps multicouche (10) selon l'une des revendications précédentes,
**caractérisé en ce que**
une ou plusieurs des surfaces de facette (50) sont dotées d'une structure diffractive (44), d'une structure de diffraction d'ordre nul (45) ou d'un nanotexte (46, 47), et/ou
**en ce que** la deuxième couche (24) présente un système de couche en film mince qui présente une ou plusieurs couches de distance (242) dont l'épaisseur de couche est choisie de telle sorte que le système de couche en film mince génère par interférence de la lumière incidente un effet de décalage de couleur dépendant de l'angle d'observation, en particulier dans la plage de longueurs d'onde visible et/ou
**en ce que** la deuxième couche comprend une couche de cristal liquide orientée
et/ou **en ce que** la deuxième couche comprend une couche métallique (243) et/ou une couche de HRI.

11. Corps multicouche (10) selon l'une des revendications précédentes,
**caractérisé en ce que**
le corps multicouche (10) présente une deuxième zone (32), dans lequel un ou plusieurs des paramètres F, S, H, P, Ax, Ay et Az de chacune des surfaces de facette (50) disposée dans la deuxième zone (32) varient de façon pseudo-aléatoire dans la deuxième zone (32) dans une zone de variation prédéfinie respectivement pour la deuxième zone (32) et **en ce que** les paramètres qui varient de façon pseudo-aléatoire dans la première et dans la deuxième zone (31, 32) se distinguent et/ou au moins une zone de variation des paramètres ayant varié est choisie de façon différente dans la première et dans la deuxième zone (31, 32), en particulier **en ce que** l'au moins une zone de variation se distingue d'au moins 20 % dans la première zone (31) de la deuxième zone (32).

12. Corps multicouche (10) selon l'une des revendications précédentes,
**caractérisé en ce que**
dans une zone partielle (312) de la première zone (31) qui n'est pas dotée des surfaces de facette (50) est formée une structure d'arrière-plan (44) dans la deuxième surface (232) de la première couche (23), dans lequel la structure d'arrière-plan (44) comprend en particulier une structure en relief diffractive et/ou réfractive, en particulier un Kinegram®.

13. Corps multicouche (10) selon la revendication 12,
**caractérisé en ce que**
la partie de surface des zones de surface (311) dotées des surfaces de facette (50) du corps multicouche sur la surface totale des surfaces partielles (311) dotées des surfaces de facette (50) de la première zone et des zones de surface (312) dotées de la structure d'arrière-plan (44) de la première zone est inférieure à 70 %, de préférence, inférieure à 50 %, de manière davantage préférée, inférieure à 30 % lors d'une observation du corps multicouche perpendiculairement au plan de base et/ou
**en ce que** les surfaces de facette voisines (50) des centres de gravité de surface sont distantes entre 2 µm et 300 µm, de manière davantage préférée, entre 5 µm et 100 µm, et/ou **en ce que** la distance minimale entre un point du bord extérieur de chacune des surfaces de facette et un point sur le bord extérieur des surfaces de facettes voisines respectives est inférieure à 300 µm, de manière davantage préférée, inférieure à 100 µm, et de manière davantage préférée, entre 0 µm et 100 µm, de manière davantage préférée, entre 1 µm et 50 µm.

14. Corps multicouche (10) selon l'une des revendications précédentes,
**caractérisé en ce que**
la deuxième couche réfléchissante (24) dans la première zone (31) est prévue respectivement dans la zone des surfaces de facette (50) et n'est pas prévue dans une première zone partielle (312) non dotée des surfaces de facette (50), dans lequel la deuxième couche réfléchissante (24) est prévue en particulier dans la première zone (31) dans une deuxième zone partielle (313) non dotée des surfaces de facette (50) et dans lequel la première et/ou la deuxième zone partielle (312, 313) est conçue en particulier sous la forme d'un dessin et en particulier la première zone partielle forme une zone de dessin (312) et la deuxième zone partielle (12) forme une zone d'arrière-plan par rapport à la première zone partielle (312) ou inversement, et **en ce que** le corps multicouche lorsqu'il est observé en transparence propose une information visible par la constitution de la première et de la deuxième zone partielle, pour l'observateur humain, et dans lequel la première zone partielle forme en particulier une zone d'arrière-plan par rapport aux zones partielles dotées des surfaces de facette de la première zone, et renferme de préférence une multiplicité de surfaces de facette.

15. Procédé de fabrication d'un corps multicouche (10) selon la revendication 2, comprenant les étapes de :
mise à disposition d'une première couche (23) avec une première surface (231) et une deuxième surface (232) opposée à la première surface (231), dans lequel la première surface (231) de la première couche (23) définit un plan de base formé par des axes de coordonnées x et y,
le façonnage d'une multiplicité de surfaces de facette (50) dans la deuxième surface (232) de la première couche (23), en particulier par un outil d'estampage, dans lequel chacune des surfaces de facette (50) présente une dimension la plus petite (67) supérieure à 3 µm et une dimension la plus grande (68) inférieure à 300 µm, dans lequel chacune des surfaces de facette (50) est déterminée par les paramètres de forme F de la surface de facette, de grandeur de surface S de la surface de facette, de distance H du centre de gravité de surface (66) de la surface de facette du plan de base, de position P du centre de gravité de la surface (66) de la surface de facette dans le système de coordonnées formé par l'axe x et l'axe y, d'angle d'inclinaison Ax de la surface de facette autour de l'axe x par rapport au plan de base, d'angle d'inclinaison Ay de la surface de facette autour de l'axe y par rapport au plan de base et un angle azimutal Az de la surface de facette défini par l'angle de rotation de la surface de facette autour d'un axe z perpendiculaire au plan de base, et dans lequel un ou plusieurs des paramètres F, S, H, P, Ax, Ay et Az des surfaces de facette (50) disposées dans la première zone (31) varient de façon pseudo-aléatoire dans une zone de variation prédéfinie respectivement pour la première zone (31) et l'application d'une deuxième couche réfléchissante (24) sur la multiplicité de surfaces de facette ; la détermination des angles d'inclinaison Ax et Ay des surfaces de facette (50) dans la première zone (33) par une superposition additive des angles d'inclinaison Ax et Ay déterminés par une fonction f(x,y) avec la variation pseudo-aléatoire de l'angle d' inclinaison Ax et/ou de l'angle d'inclinaison Ay dans la zone de variation prédéfinie respectivement pour la première zone (31), dans lequel la fonction F(x,y) est choisie de telle sorte qu'elle fasse varier les angles d'inclinaison Ax et Ay pour générer une première information (75) optiquement variable.

16. Procédé de fabrication d'un corps multicouche selon la revendication 1, comprenant les étapes de :
mise à disposition d'une première couche (23) avec une première surface (231) et une deuxième surface (232) opposée à la première surface (231), dans lequel la première surface (231) de la première couche (23) définit un plan de base formé par des axes de coordonnées x et y, le façonnage d'une multiplicité de surfaces de facette (50) dans la deuxième surface (232) de la première couche (23), en particulier par un outil d'estampage, dans lequel chacune des surfaces de facette (50) présente une dimension la plus petite (67) supérieure à 3 µm et une dimension la plus grande (68) inférieure à 300 µm, dans lequel chacune des surfaces de facette (50) est déterminée par les paramètres de forme F de la surface de facette, de grandeur de surface S de la surface de facette, de distance H du centre de gravité de surface (66) de la surface de facette du plan de base, de position P du centre de gravité de la surface (66) de la surface de facette dans le système de coordonnées formé par l'axe x et l'axe y, d'angle d'inclinaison Ax de la surface de facette autour de l'axe x par rapport au plan de base, d'angle d'inclinaison Ay de la surface de facette autour de l'axe y par rapport au plan de base et un angle azimutal Az de la surface de facette défini par l'angle de rotation de la surface de facette autour d'un axe z perpendiculaire au plan de base, et dans lequel un ou plusieurs des paramètres F, S, H, P et Az des surfaces de facette (50) disposées dans une première zone varient dans la première zone de façon pseudo-aléatoire dans une zone de variation prédéfinie respectivement pour la première zone (31) et l'application d'une deuxième couche réfléchissante (24) sur la multiplicité de surfaces de facette ; dans lequel le corps multicouche (10) génère une première information optiquement variable et pour la génération de la première information, les angles d'inclinaison Ax et Ay des surfaces de facette (50) dans la première zone (31) varient selon une fonction f(x,y).

17. Procédé selon l'une des revendications 15 ou 16,
**caractérisé en ce que**
le procédé comprend l'étape de :
détermination de la position P de chacune des surfaces de facette (50) dans la première zone (31) par un décalage pseudo-aléatoire du centre de gravité de surface (66) de la surface de facette respective (50) à partir de sa position normale respective (65) en direction x et/ou en direction y, dans lequel une grille bidimensionnelle formée de l'axe x et de l'axe y définit pour chacune des surfaces de facette disposées dans la première zone (31) la position normale (65) du centre de gravité de surface (66) de la surface de facette respective (50) dans le plan de base.
